(19) Europäisches Patentamt
European Patent Office
Office européen des brevets

(11) EP 2 966 133 B1

# (12) EUROPEAN PATENT SPECIFICATION

(45) Date of publication and mention of the grant of the patent:
**20.09.2017 Bulletin 2017/38**

(21) Application number: **14760131.4**

(22) Date of filing: **07.03.2014**

(51) Int Cl.:
***C09D 11/30*** *(2014.01)* ***B41M 5/00*** *(2006.01)*
***B41M 5/50*** *(2006.01)* ***B41M 5/52*** *(2006.01)*
***C09D 11/40*** *(2014.01)* ***C09D 11/107*** *(2014.01)*
***C09D 11/322*** *(2014.01)* ***C09D 11/101*** *(2014.01)*

(86) International application number:
**PCT/JP2014/055910**

(87) International publication number:
**WO 2014/136923 (12.09.2014 Gazette 2014/37)**

## (54) INKJET INK COMPOSITION, INKJET RECORDING METHOD, PRINTED MATTER AND METHOD OF PRODUCING FORMED PRINTED MATTER

TINTENZUSAMMENSETZUNG FÜR TINTENSTRAHL, TINTENSTRAHLAUFZEICHNUNGSVERFAHREN, DRUCKSACHE UND VERFAHREN ZUR HERSTELLUNG VON DRUCKSACHEN

COMPOSITION D'ENCRE POUR IMPRESSION PAR JET D'ENCRE, PROCÉDÉ D'IMPRESSION PAR JET D'ENCRE, MATIÈRE IMPRIMÉE ET PROCÉDÉ DE PRODUCTION DE MATIÈRE IMPRIMÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.03.2013 JP 2013045776**

(43) Date of publication of application:
**13.01.2016 Bulletin 2016/02**

(73) Proprietor: **FUJIFILM Corporation**
**Tokyo 106-8620 (JP)**

(72) Inventor: **UMEBAYASHI, Tsutomu**
**Ashigarakami-gun**
**Kanagawa 258-8577 (JP)**

(74) Representative: **Hoffmann Eitle**
**Patent- und Rechtsanwälte PartmbB**
**Arabellastraße 30**
**81925 München (DE)**

(56) References cited:
**EP-A1- 1 975 213** **JP-A- 2008 045 145**
**JP-A- 2008 045 147** **JP-A- 2008 050 600**
**JP-A- 2009 179 681** **JP-A- 2009 185 186**
**JP-A- 2010 083 976** **JP-A- 2010 222 386**
**US-A1- 2009 202 795** **US-A1- 2010 249 261**
**US-A1- 2011 159 251** **US-A1- 2012 069 082**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 966 133 B1

## Description

The present invention relates to an inkjet ink composition, an inkjet recording method, a printed material, and a process for producing a molded printed material.

As image recording methods for forming an image on a recording medium such as paper and plastic based on an image data signal, there are an electrophotographic system, sublimation type and melt type thermal transfer systems, a screen printing system, an inkjet system, etc. In the electrophotographic system, a process of forming an electrostatic latent image on a photosensitive drum by electrically charging and exposing is required, and the system is complicated; as a result, there is the problem that the production cost is high. With regard to the thermal transfer system, although the equipment is inexpensive, due to the use of an ink ribbon there is the problem that the running cost is high and waste material is generated. Screen printing has the problem that the cost increases due to the necessity for frequent setup operations such as plate making or preparation of a printing plate, the replacement of plate and ink, and setting of printing conditions.

On the other hand, the inkjet method employs inexpensive equipment, and since image formation is carried out directly above a recording medium by discharging an ink composition only onto a required image area without requiring a plate when printing, the ink composition can be used efficiently, and the running costs are low, particularly for small lot production. Furthermore, there is little noise, it is excellent as an image recording method, and has been attracting attention in recent years.

In particular, an inkjet ink composition that is curable upon exposure to radiation such as UV (radiation-curable inkjet ink composition) is an excellent system from the viewpoint of it being printed on various types of substrates because of the drying properties being excellent compared with a solvent-based ink composition since the majority of the components of the ink composition cure upon exposure to radiation such as UV, and because of the image being resistant to spreading.

It is also possible to produce a molding using the inkjet method using this radiation-curable inkjet ink. One example of the molding comprises a molding produced by forming an ink image on a plastic medium, irradiating it with actinic radiation to thus cure the image, and then heating and softening the substrate to thus freely change the shape.

A conventional 3D plastic molding is usually produced by an image formation process that involves screen printing and then carrying out vacuum forming (ref. e.g. JP-A-2002-273830 (JP-A denotes a Japanese unexamined patent application publication)). On the other hand, processes for producing a plastic molding using an inkjet method have been developed in recent years (ref. e.g. JP-A-2009-185186, JP-A-2010-235697, JP-A-2009-209353, and JP-A-2011-225824).

It is an object of the present invention to provide an inkjet ink composition that has excellent adhesion to a substrate, that gives a printed material having excellent blocking resistance and suitability for vacuum forming, and that can suppress post-processing cracking of a molded printed material after vacuum forming, an inkjet recording method using the inkjet ink composition, a printed material, and a process for producing a molded printed material.

The objects are achieved by means described in <1 > and <11> to <14> below. They are shown together with <2> to <10>, which are preferred embodiments.

<1> An inkjet ink composition comprising:

(Component A) *N*-vinylcaprolactam,
(Component B) a monofunctional acrylate having an aromatic ring,
(Component C) a monofunctional acrylate having an aliphatic hydrocarbon ring,
(Component D) a polyether-modified silicone compound having a (meth)acrylate group,
(Component E) an acrylic resin having a glass transition temperature (Tg) of 20°C to 100°C and which is a copolymer of two or more types of methacrylic compounds selected from the group consisting of methyl methacrylate, n-butyl methacrylate, phenoxyethyl methacrylate, tetrahydrofurfuryl methacrylate, 2-ethylhexyl methacrylate, isodecyl methacrylate, methoxypolyethylene glycol methacrylate, n-lauryl methacrylate, cyclohexyl methacrylate, 2-ethylhexyl methacrylate and t-butyl methacrylate,
(Component F) a pigment, and
(Component G) a photopolymerization initiator,
wherein the total content of Component A to Component C is at least 90 mass% of the total mass of polymerizable compounds, excluding Component D, in the ink composition, and
the content of Component E is 1 to 8 mass% relative to the total mass of the ink composition,

<2> the inkjet ink composition according to <1> above, wherein Component B is 2-phenoxyethyl acrylate,
<3> the inkjet ink composition according to <1> or <2> above, wherein Component C is at least one type of compound selected from the group consisting of 3,3,5-trimethylcyclohexyl acrylate, *t*-butylcyclohexyl acrylate, and isobornyl

acrylate,
<4> the inkjet ink composition according to any one of <1> to <3> above, wherein Component C is *t*-butylcyclohexyl acrylate,
<5> the inkjet ink composition according to any one of <1> to <4> above, wherein Component D is a polyether-modified silicone compound having four to six (meth)acrylate groups,
<6> the inkjet ink composition according to any one of <1> to <5> above, wherein Component D has a content of 0.5 to 3 mass% relative to the total mass of the ink composition,
<7> the inkjet ink composition according to any one of <1> to <6> above, wherein the contents of Component A to Component C satisfy (content of Component C)/(content of Component A + content of Component B) < 0.5 as a ratio by mass,
<8> the inkjet ink composition according to any one of <1> to <7> above, wherein Component E has a weight-average molecular weight of 5,000 to 10,000,
<9> the inkjet ink composition according to any one of <1> to <8> above, wherein it is an inkjet ink composition for vacuum forming,
<10> the inkjet ink composition according to any one of <1> to <9> above, wherein it is an inkjet ink composition for vacuum forming and trimming,
<11> an inkjet recording method comprising ($a^1$) a step of discharging the inkjet ink composition according to any one of <1> to <10> above onto a support, and ($b^1$) a step of curing the ink composition by irradiating the discharged ink composition with actinic radiation,
<12> a printed material obtained by the inkjet recording method according to <11> above,
<13> a process for producing a molded printed material, comprising ($a^2$) a step of forming an image by discharging the inkjet ink composition according to any one of <1> to <10> above onto a support by an inkjet method, ($b^2$) a step of curing the ink composition by irradiating the obtained image with actinic radiation to thus obtain a printed material having a cured image above the support, and ($c^2$) a step of molding the printed material, and
<14> a process for producing a molded printed material, comprising (1) a step of forming an image by discharging the inkjet ink composition according to any one of <1> to <10> above by an inkjet method onto a substrate having a thickness of 0.5 to 3 mm selected from the group consisting of polycarbonate, polystyrene, an acrylic resin, polyethylene terephthalate, and an acrylonitrile-butadiene-styrene copolymer, (2) a step of curing the ink composition by irradiating the obtained image with actinic radiation to thus obtain a printed material having a cured image above the support, (3) a step of heating the printed material in a range of 70°C to 200°C, (4) a step of inserting the heated printed material into a mold and molding it into a three-dimensional structure by means of at least vacuum forming to thus obtain a molded printed material, and (5) a step of subjecting the molded printed material to trimming.

In accordance with the present invention, there can be provided an inkjet ink composition that has excellent adhesion to a substrate, that gives a printed material having excellent blocking resistance and suitability for vacuum forming, and that can suppress post-processing cracking of a molded printed material after vacuum forming, an inkjet recording method using the inkjet ink composition, a printed material, and a process for producing a molded printed material.

The present invention is explained in detail below.

In the present specification, the notation 'xx to yy' means a numerical range that includes xx and yy. Furthermore, '(Component A) *N*-vinylcaprolactam', etc. is also simply called 'Component A', etc.

The term '(meth)acrylate', etc. has the same meaning as 'acrylate and/or methacrylate', etc., and the same applies below.

Furthermore, in the present invention, 'mass%' and 'wt%' have the same meaning, and 'parts by mass' and 'parts by weight' have the same meaning.

1. Inkjet ink composition

The inkjet ink composition of the present invention (hereinafter, also called simply an 'ink composition') comprises (Component A) *N*-vinylcaprolactam, (Component B) a monofunctional acrylate having an aromatic ring, (Component C) a monofunctional acrylate having an aliphatic hydrocarbon ring, (Component D) a polyether-modified silicone compound having a (meth)acrylate group, (Component E) an acrylic resin having a glass transition temperature (Tg) of 20°C to 100°C, (Component F) a pigment, and (Component G) a photopolymerization initiator, wherein the total content of Component A to Component C is at least 90 mass% of the total mass of polymerizable compounds, excluding Component D, in the ink composition, and a content of Component E is 1 to 8 mass% relative to the total mass of the ink composition.

The inkjet ink composition of the present invention may be suitably used as an inkjet ink composition for molding, may be more suitably used as an inkjet ink composition for vacuum forming, and may be particularly suitably used as

an inkjet ink composition for vacuum forming and trimming.

In the production of a three-dimensional plastic molding using screen printing, when inkjet printing is employed, in addition to conventionally known film cracking when a film is stretched in vacuum forming, the present inventors have found two new problems, that is, whitening and post-processing cracking. Whitening is the phenomenon of gaps between dots increasing due to stretching, and a decrease in density becoming prominent when the displacement of the positions where ink has landed is large; this is not seen when conventional screen printing is employed, and is a problem intrinsic to inkjet printing. Furthermore, post-processing cracking is the phenomenon of the occurrence of cracking or peeling of film, etc. when a molded printed material after vacuum forming is subjected to trimming (hole-making, cutting, etc.). Whereas the thickness of the ink film when conventional screen printing is employed is 5 to 10 μm, the thickness of the ink film when inkjet printing is employed is 10 to 20 μm. Post-processing cracking occurs more easily when the thickness increases, and this can be said to be a problem intrinsic to inkjet printing.

The ink composition of the present invention is an actinic radiation-curable ink composition, and preferably an oil-based ink composition. The ink composition of the present invention preferably contains as little water and volatile solvent as possible; if they are contained, the content is preferably no greater than 5 mass% relative to the total mass of the ink composition, more preferably no greater than 1 mass%, and yet more preferably no greater than 0.5 mass%.

The 'actinic radiation' referred to in the present invention is not particularly limited as long as it is actinic radiation that can provide energy that enables an initiating species to be generated in the ink composition when irradiated, and broadly includes α rays, γ rays, X rays, ultra-violet rays (UV rays), visible light, and an electron beam; among these, UV rays and an electron beam are preferable from the viewpoint of curing sensitivity and the availability of equipment, and UV rays are particularly preferable. The ink composition of the present invention is therefore preferably an ink composition that is curable upon exposure to UV rays as radiation.

The inkjet ink composition of the present invention comprises (Component A) *N*-vinylcaprolactam, (Component B) a monofunctional acrylate having an aromatic ring, and (Component C) a monofunctional acrylate having an aliphatic hydrocarbon ring, and the total content of Component A to Component C is at least 90 mass% relative to the total mass of polymerizable compounds, excluding Component D, in the ink composition. Due to the total content of Component A to Component C being at least 90 mass% relative to the total mass of polymerizable compounds, excluding Component D, in the ink composition, it is possible to form an ink film having excellent vacuum forming suitability and having excellent curability and blocking resistance. Furthermore, from the viewpoint of vacuum forming suitability, curability, and blocking resistance, the total content of Component A to Component C is preferably at least 95 mass% relative to the total mass of polymerizable compounds, excluding Component D, in the ink composition, and more preferably at least 98 mass%.

Moreover, in the inkjet ink composition of the present invention, the contents of Component A to Component C preferably satisfy (content of Component C)/(content of Component A + content of Component B) < 0.6 as a ratio by mass, more preferably satisfy (content of Component C)/(content of Component A + content of Component B) < 0.5, and particularly preferably satisfy (content of Component C)/(content of Component A + content of Component B) < 0.3. Furthermore, it is preferable for (content of Component C)/(content of Component A + content of Component B) > 0.1 to be satisfied, and it is more preferable for (content of Component C)/(content of Component A + content of Component B) > 0.15 to be satisfied. When in this range, post-processing cracking at the time of trimming a molded printed material after vacuum forming can be suppressed.

(Component A) *N*-vinylcaprolactam

The inkjet ink compound of the present invention comprises (Component A) *N*-vinylcaprolactam. Due to it comprising Component A, the curability and adhesion to polycarbonate (PC), polystyrene (PS), polyethylene terephthalate (PET), acrylic, etc. substrates, which are substrates usually used in vacuum forming, are excellent, and the blocking resistance of a printed material obtained is also excellent. *N*-vinylcaprolactam is a compound having the structure below.

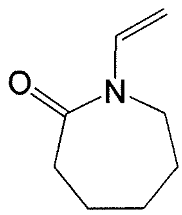

The ink composition of the present invention preferably comprises Component A at 5 to 40 mass% of the entire ink composition, and more preferably 10 to 30 mass%. When in this range, its storage stability and the strength of a cured film that is obtained are excellent.

(Component B) Monofunctional acrylate having aromatic ring

The inkjet ink compound of the present invention comprises (Component B) a monofunctional acrylate having an aromatic ring. Due to it comprising Component B, the adhesion to a substrate is excellent, and the blocking resistance of a printed material that is obtained is excellent. Furthermore, when Component A and Component B are used in combination, the curability is excellent.

The aromatic ring of Component B may be monocyclic or polycyclic, and there may be only one aromatic ring or there may be two or more aromatic rings.

The monofunctional acrylate having an aromatic ring is not particularly limited as long as it is a compound having at least one aromatic ring and one acrylate group, and is preferably a compound represented by Formula (B-1) below.

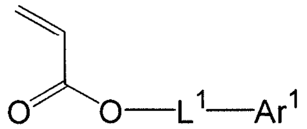

(B - 1)

(In Formula (B-1), $Ar^1$ denotes an aromatic group, and $L^1$ denotes a single bond, an alkylene group, an alkyleneoxy group, or a polyalkyleneoxy group.)

Preferred examples of the aromatic group in $Ar^1$ include a phenyl group, which is monocyclic aromatic, and a polycyclic aromatic group having 2 to 4 rings; and specific preferred examples thereof include, but are not limited to, a naphthyl group, an anthryl group, a 1H-indenyl group, a 9H-fluorenyl group, a 1H-phenalenyl group, a phenanthrenyl group, a triphenylenyl group, a pyrenyl group, a naphthacenyl group, a tetraphenyl group, a biphenylenyl group, an as-indacenyl group, an s-indacenyl group, an acenaphthylenyl group, a fluoranthenyl group, an acephenanthrylenyl group, an aceanthrylenyl group, a chrysenyl group, and a pleiadenyl group.

Among them, a phenyl group is preferable.

The aromatic group may have one or more substituents such as an alkyl group, an aryl group, a halogen atom, a hydroxyl group, an amino group, a mercapto group, a siloxane group, or a group having no greater than 30 carbons. Two or more substituents of the aromatic group may form a ring structure containing a heteroatom such as O, N, or S as in, for example, phthalic anhydride or phthalimide.

$L^1$ is preferably a single bond, an alkyleneoxy group, or a polyalkyleneoxy group, more preferably a single bond or an alkyleneoxy group, and particularly preferably an ethyleneoxy group.

Specific preferred examples of Component B include 2-phenoxyethyl acrylate, benzyl acrylate, an ethylene oxide (EO)-modified phenol acrylate, an EO-modified nonylphenol acrylate, an EO-modified cresol acrylate, a propylene oxide (PO)-modified phenol acrylate, a PO-modified nonylphenol acrylate, a PO-modified cresol acrylate, phenyl acrylate, and naphthyl acrylate, and more preferred examples include 2-phenoxyethyl acrylate, benzyl acrylate, an EO-modified phenol acrylate, and an EO-modified nonylphenol acrylate.

Among them, because of low odor, low viscosity, and excellent inkjet suitability, 2-phenoxyethyl acrylate is particularly preferable.

With regard to Component B, one type may be used on its own or two or more types may be used in combination.

The content of Component B is preferably 10 to 70 mass% relative to the total mass of the ink composition, and more preferably 20 to 50 mass%. When in this range, the storage stability is excellent, and the blocking resistance of a printed material that is obtained is better.

(Component C) Monofunctional acrylate having aliphatic hydrocarbon ring

The inkjet ink compound of the present invention comprises (Component C) a monofunctional acrylate having an aliphatic hydrocarbon ring. Due to it comprising Component C, a printed material that is obtained has excellent blocking resistance. Furthermore, due to the combined use of Component A and Component C, the curability is excellent.

The aliphatic hydrocarbon ring of Component C may be monocyclic or it may be a polycyclic ring such as a fused ring or a bridged ring, and there may be only one aliphatic ring or there may be two or more aliphatic rings.

The monofunctional acrylate having an aliphatic hydrocarbon ring is not particularly limited as long as it is a compound having at least one aliphatic hydrocarbon ring and one acrylate group, and it is preferably a compound represented by Formula (C-1) below.

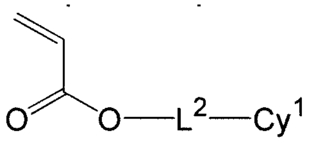

( C - 1 )

(In Formula (B-1), $Cy^1$ denotes an aliphatic hydrocarbon ring group, and $L^2$ denotes a single bond, an alkylene group, an alkyleneoxy group, or a polyalkyleneoxy group.)

Examples of the aliphatic hydrocarbon ring group denoted by $Cy^1$ include a cyclohexyl group, a 3,3,5-trimethylcyclohexyl group, a 4-*t*-butylcyclohexyl group, an isobornyl group, a norbornyl group, a dicyclopentanyl group, a dicyclopentenyl group, and a tricyclodecanyl group.

The aliphatic hydrocarbon ring group may have one or more alkyl group, halogen atom, hydroxy group, amino group, thiol group, siloxane group, or substituent having no greater than 30 carbons. For example, two or more substituents of the aliphatic hydrocarbon ring group may form a cyclic structure comprising a heteroatom such as O, N, or S. Furthermore, the aliphatic hydrocarbon ring group may comprise an ethylenically unsaturated bond.

$L^2$ is preferably a single bond, a single bond, an alkyleneoxy group, or a polyalkyleneoxy group, more preferably a single bond or an alkyleneoxy group, and particularly preferably a single bond.

Specific preferred examples of Component C include 3,3,5-trimethylcyclohexyl acrylate, 4-*t*-butylcyclohexyl acrylate, isobornyl acrylate, norbornyl acrylate, cyclohexyl acrylate, cyclopentyl acrylate, cycloheptyl acrylate, cyclooctyl acrylate, cyclodecyl acrylate, dicyclodecyl acrylate, dicyclopentanyloxyethyl acrylate, and dicyclopentenyloxyethyl acrylate, more preferred examples include 3,3,5-trimethylcyclohexyl acrylate, 4-*t*-butylcyclohexyl acrylate, isobornyl acrylate, and cyclohexyl acrylate, and yet more preferred examples include 3,3,5-trimethylcyclohexyl acrylate, 4-*t*-butylcyclohexyl acrylate, and isobornyl acrylate.

Among them, from the viewpoint of low odor, low viscosity, inkjet suitability, and trimming suitability, Component C is particularly preferably *t*-butylcyclohexyl acrylate or 3,3,5-trimethylcyclohexyl acrylate, and from the viewpoint of achieving a balance between blocking resistance and trimming suitability, *t*-butylcyclohexyl acrylate is most preferable.

With regard to Component C, one type may be used on its own or two or more types may be used in combination.

The content of Component C is preferably 2 to 40 mass% relative to the total mass of the ink composition, more preferably 5 to 30 mass%, and yet more preferably 10 to 20 mass%. When in this range, a printed material that is obtained is excellent in terms of blocking resistance.

(Component D) Polyether-modified silicone compound having (meth)acrylate group

The inkjet ink compound of the present invention comprises (Component D) a polyether-modified silicone compound having a (meth)acrylate group. Due to it comprising Component D, the curability is excellent, and the blocking resistance and the vacuum forming suitability of a printed material that is obtained are excellent.

Component D is not particularly limited as long as it is a compound having a (meth)acrylate group, a polyether moiety, and a polysiloxane moiety, but it is preferably a compound having a molecular weight of at least 500, and more preferably a compound having a molecular weight (weight-average molecular weight) of at least 1,000. Furthermore, the molecular weight (weight-average molecular weight) of Component D is preferably no greater than 100,000, more preferably no greater than 50,000, and yet more preferably no greater than 20,000.

From the viewpoint of curability, blocking resistance, and vacuum forming suitability, the number of (meth)acrylate groups of Component D is preferably 4 to 6.

Furthermore, the ratio by mass of the polyether moiety to the polysiloxane moiety in Component D is preferably polyether moiety:polysiloxane moiety = 1:1 to 1:2 since the blocking resistance can be improved effectively.

The position of bonding of the (meth)acrylate group in Component D is not particularly limited, and may be in a main chain or in a side chain.

Furthermore, the position of polyether modification of Component D is not particularly limited, and may be at one terminal of the main chain, at both terminals thereof, or in a side chain.

The polyether moiety of Component D is preferably a polyalkyleneoxy group.

Moreover, Component D is preferably a polydimethylsiloxane compound.

As Component D, a commercial product may suitably be used, and examples include TEGORAD 2010, 2011, 2100, 2200N, 2250, 2300, 2500, 2600, and 2700 (all manufactured by Evonik).

With regard to Component D, one type may be used on its own or two or more types may be used in combination.

The content of Component D is preferably 0.1 to 10 mass% relative to the total mass of the ink composition, more preferably 0.5 to 4 mass%, and yet more preferably 0.5 to 3 mass%. When in this range, its curability and the blocking resistance of a printed material that is obtained are better, and the vacuum forming suitability is better.

(Component E) Acrylic resin having glass transition temperature (Tg) of 20°C to 100°C

The inkjet ink compound of the present invention comprises (Component E) an acrylic resin having a glass transition temperature (Tg) of 20°C to 100°C, and the content of Component E is 1 to 8 mass% relative to the total mass of the ink composition. When it comprises Component E in this range, the inkjet discharge properties, adhesion to a substrate, and blocking resistance of a printed material that is obtained are excellent, and post-processing cracking at the time of trimming after vacuum forming can be suppressed.

The glass transition temperature (Tg) of Component E is 20°C to 100°C, preferably 35°C to 95°C, and more preferably 60°C to 90°C. When in this range, the inkjet discharge properties, the adhesion, and the blocking resistance of a printed material that is obtained are better, and post-processing cracking at the time of trimming after vacuum forming can be further suppressed. Furthermore, when the Tg of Component E is less than 20°C, the adhesion and blocking resistance are degraded. When the Tg of Component E exceeds 100°C, inkjet discharge suitability is degraded or post-processing cracking at the time of trimming after vacuum forming easily occurs.

From the viewpoint of adhesion to a substrate, blocking resistance, and inkjet discharge suitability, the weight-average molecular weight of Component E is preferably 3,000 to 100,000, more preferably 3,000 to 80,000, and yet more preferably 3,000 to 50,000.

Although it is not a serious problem for a printed material that will not be subjected to vacuum forming, in the case of a printed material for vacuum forming for which the inkjet ink composition of the present invention is suitably used, from the viewpoint of preventing the phenomenon of gaps between dots increasing due to stretching, and a decrease in density becoming prominent, that is, whitening during vacuum forming, the weight-average molecular weight of Component E is particularly preferably 5,000 to 10,000.

The molecular weight, such as the weight-average molecular weight (Mw) or the number-average molecular weight (Mn), of a polymer compound in the present invention is a measured value that is obtained by actual measurement. Specifically, a polymer molecular weight means a value measured using high performance liquid chromatography under usual measurement conditions.

Furthermore, the glass transition temperature (Tg) of a polymer compound in the present invention is a measured Tg that is obtained by actual measurement. Specifically, a measured Tg may be a value measured using an EXSTAR 6220 differential scanning calorimeter (DSC) manufactured by SII Nanotechnology Inc. under usual measurement conditions.

When measurement is difficult due to decomposition, etc. of a polymer, a calculated Tg obtained by the equation below may be used. The calculated Tg is calculated using Equation (T) below.

$$1/Tg = \Sigma\,(Xi/Tgi) \cdots (T)$$

Here, i = 1 to n, and a polymer for which the calculation is to be employed is assumed to be a copolymer of n types of monomer components. Xi is the weight fraction (ΣXi = 1) of the ith monomer, and Tgi is the glass transition temperature (absolute temperature) of a homopolymer of the ith monomer. Σ is the sum for i = 1 to n. The value of the glass transition temperature of the homopolymer of each monomer (Tgi) may be referred to in the Polymer Handbook (3rd Edition) (J. Brandrup, E. H. Immergut (Wiley-Interscience, 1989)).

From the viewpoint of ease of control of Tg, good compatibility with the ink, and low cost, Component E is a copolymer of two or more types of methacrylic compounds selected from the group consisting of methyl methacrylate, *n*-butyl methacrylate, phenoxyethyl methacrylate, tetrahydrofurfuryl methacrylate, 2-ethylhexyl methacrylate, isodecyl methacrylate, methoxypolyethylene glycol methacrylate, *n*-lauryl methacrylate, cyclohexyl methacrylate, 2-ethylhexyl methacrylate, and *t*-butyl methacrylate, more preferably a copolymer of methyl methacrylate and a methacrylic compound selected from the group consisting of *n*-butyl methacrylate, phenoxyethyl methacrylate, tetrahydrofurfuryl methacrylate, 2-ethylhexyl methacrylate, isodecyl methacrylate, methoxypolyethylene glycol methacrylate, and *n*-lauryl methacrylate, and yet more preferably a copolymer of methyl methacrylate and *n*-butyl methacrylate.

With regard to Component E, one type may be used on its own or two or more types may be used in combination.

Furthermore, Component E is preferably an inactive acrylic resin. The 'inactive acrylic resin' in the present invention means the acrylic resin being a polymer that does not have a polymerizable functional group that can undergo a further chain-growth polymerization reaction and that does not have a crosslinkable and/or crosslinking functional group that can undergo a further successive crosslinking reaction. That is, it means an acrylic resin in a state in which there is substantially no occurrence of a polymerization reaction or a crosslinking reaction.

The content of Component E is 1 to 8 mass% relative to the total mass of the ink composition, preferably 2 to 6 mass%, and more preferably 3 to 5 mass%. When in this range, the inkjet discharge properties, the adhesion, and the blocking resistance of a printed material that is obtained are better.

(Component F) Pigment

The ink composition of the present invention comprises (Component F) a pigment.

The pigment that can be used in the present invention is not particularly limited, and a known pigment may be used.

As the pigment, from the viewpoint of not suppressing sensitivity to a curing reaction by actinic radiation, a compound that does not function as a polymerization inhibitor in a polymerization reaction, which is a curing reaction, is preferably selected.

The pigment that can be used in the present invention is not particularly limited and, for example, organic and inorganic pigments with the Color Index Nos. shown below may be used according to the intended purpose.

Red or magenta pigments: Pigment Red 3, 5, 19, 22, 31, 38, 42, 43, 48:1, 48:2, 48:3, 48:4, 48:5, 49:1, 53:1, 57:1, 57:2, 58:4, 63:1, 81, 81:1, 81:2, 81:3, 81:4, 88, 104, 108, 112, 122, 123, 144, 146, 149, 166, 168, 169, 170, 177, 178, 179, 184, 185, 208, 216, 226, and 257, Pigment Violet 3, 19, 23, 29, 30, 37, 50, and 88, and Pigment Orange 13, 16, 20, and 36.

Blue or cyan pigments: Pigment Blue 1, 15, 15:1, 15:2, 15:3, 15:4, 15:6, 16, 17-1, 22, 27, 28, 29, 36, and 60.

Green pigments: Pigment Green 7, 26, 36, and 50.

Yellow pigments: Pigment Yellow 1, 3, 12, 13, 14, 17, 34, 35, 37, 55, 74, 81, 83, 93, 94, 95, 97, 108, 109, 110, 120, 137, 138, 139, 153, 154, 155, 157, 166, 167, 168, 180, 185, and 193.

Black pigments: Pigment Black 7, 28, and 26.

White pigments: Pigment White 6, 18, and 21.

It is preferable that the pigment that can be used in the present invention is mixed with a dispersant and dispersed in a polymerizable monomer or is dispersed after mixing the polymerizable monomer and the dispersant. For dispersion of the pigment, for example, a dispersing machine such as a ball mill, a sand mill, an attritor, a roll mill, an agitator, a Henschel mixer, a colloidal mill, an ultrasonic homogenizer, a pearl mill, a wet type jet mill, or a paint shaker may be used.

The pigment may be directly mixed with another component when preparing an ink composition or, in order to improve dispersion properties, it may be mixed after being added in advance to a dispersion medium such as a solvent or a polymerizable monomer used in the present invention such as Components A to C and uniformly dispersing or dissolving it.

In the present invention, in order to prevent degradation of solvent resistance when there is residual solvent in a cured image and prevent the VOC (Volatile Organic Compound) problem due to residual solvent, the colorant is preferably added to a dispersion medium such as a polymerizable monomer and then mixed. When only taking dispersion suitability into consideration, it is preferable to select a monomer having the lowest viscosity as the polymerizable monomer used for adding the pigment to.

These pigments may be used by appropriately selecting one type or two or more types according to the intended purpose of the ink composition.

When a pigment that is present as a solid in the ink composition is used, it is preferable for the pigment, the dispersant, and the dispersion medium to be selected and for dispersion conditions and filtration conditions to be set so that the average particle size of pigment particles is preferably 0.005 to 0.5 $\mu$m, more preferably 0.01 to 0.45 $\mu$m, and yet more preferably 0.015 to 0.4 $\mu$m. By such control of particle size, clogging of a head nozzle can be suppressed, and the storage stability, the transparency, and the curing sensitivity of the ink composition can be maintained.

The content of the pigment in the ink composition of the present invention is appropriately selected according to the color and the intended purpose, and is preferably 0.01 to 30 mass% relative to the mass of the entire ink composition.

In the present invention, with regard to the ratio by weight of the dispersant relative to the pigment, when the weight of the pigment in the ink composition is P and the weight of the dispersant in the ink composition is R, the ratio by weight (R/P) is $0.05 < R/P \leq 15$, preferably $0.1 \leq R/P \leq 10$, and more preferably $0.1 \leq R/P \leq 5$. When the ratio by weight of the dispersant relative to the pigment exceeds 0.5, after being stored over time there is no aggregation/precipitation of the pigment, the viscosity of the ink composition does not increase, and an ink composition having excellent storage stability over time can thus be obtained. Furthermore, when the ratio is 15 or less, an ink composition having a low viscosity and excellent discharge properties can be obtained.

(Component G) Photopolymerization initiator

The ink composition comprises (Component G) a photopolymerization initiator.

The photopolymerization initiator is preferably a radical photopolymerization initiator, and includes a radical photopolymerization initiator having a molecular weight of at least 250.

As a photopolymerization initiator that can be used in the present invention, a known radical photopolymerization initiator may be used. The radical photopolymerization initiator that can be used in the present invention may be used

singly or in a combination of two or more types.

The photopolymerization initiator that can be used in the present invention is a compound that forms a polymerization initiating species by absorbing external energy. Examples of the actinic radiation include γ rays, β rays, an electron beam, ultraviolet rays, visible light, and infrared rays.

In the present invention, the molecular weight of the radical photopolymerization initiator is preferably at least 250, more preferably at least 280, and yet more preferably at least 300. When in this range, in a heating step when producing a molding, it is possible to suppress evaporation of residual low-molecular-weight initiator that contaminates by adhering to the molding itself or to surrounding equipment, and to suppress the occurrence of cloudiness, etc. of a molding.

When a radical polymerization initiator having a molecular weight of at least 250 and a polymerization initiator having a molecular weight of less than 250 are used in combination, the content of the radical polymerization initiator having a molecular weight of at least 250 is preferably at least 50 wt% of the total amount of polymerization initiator, more preferably at least 80 wt%, yet more preferably at least 90 mass%, and particularly preferably 100 wt%, that is, the radical polymerization initiator having a molecular weight of at least 250 being 100 wt% and the radical polymerization initiator having a molecular weight of less than 250 not being contained.

Examples of the radical polymerization initiator that can be used in the present invention include (a) an aromatic ketone, (b) an acylphosphine compound, (c) an aromatic onium salt compound, (d) an organic peroxide, (e) a thio compound, (f) a hexaarylbiimidazole compound, (g) a ketoxime ester compound, (h) a borate compound, (i) an azinium compound, (j) a metallocene compound, (k) an active ester compound, (l) a compound having a carbon-halogen bond, and (m) an alkylamine compound. With regard to these radical polymerization initiators, the above-mentioned compounds (a) to (m) may be used singly or in combination. For examples, the above-mentioned compounds (a) may be used in a combination of two or more types. The radical polymerization initiator in the present invention may suitably be used singly or in a combination of two or more types.

Furthermore, in the present invention a radical polymerization initiator having a molecular weight of at least 250 and a radical polymerization initiator having a molecular weight of less than 250 may be used in combination. In the explanation below, a radical polymerization initiator having a molecular weight of less than 250 is also described.

Preferred examples of the aromatic ketone (a) and the thio compound (e) include a compound having a benzophenone skeleton or a compound having a thioxanthone skeleton (thioxanthone compound) described in 'RADIATION CURING IN POLYMER SCIENCE AND TECHNOLOGY' J. P. FOUASSIER J. F. RABEK (1993), pp. 77 to 117. Preferred examples of the aromatic ketone (a), the acylphosphine compound (b) and the thio compound (e) include an α-thiobenzophenone compound described in JP-B-47-6416, a benzoin ether compound described in JP-B-47-3981, an α-substituted benzoin compound described in JP-B-47-22326, a benzoin derivative described in JP-B-47-23664, an aroylphosphonic acid ester described in JP-A-57-30704, a dialkoxybenzophenone described in JP-B-60-26483, benzoin ethers described in JP-B-60-26403 and JP-A-62-81345, α-aminobenzophenones described in JP-B-1-34242, US Pat. No. 4,318,791, and EP No. 0284561, p-di(dimethylaminobenzoyl)benzene described in JP-A-2-211452, a thio-substituted aromatic ketone described in JP-A-61-194062, an acylphosphine sulfide described in JP-B-2-9597, an acylphosphine described in JP-B-2-9596, a thioxanthone described in JP-B-63-61950, and a coumarin described in JP-B-59-42864.

Examples of the benzophenone compound include benzophenone (molecular weight (MW): 182.2), 4-phenylbenzophenone (MW: 258), isophthalophenone (MW: 286), 4',4"-diethylisophthalophenone (MW: 342), and 4-benzoyl-4'-methylphenylsulfide (MW: 304). Examples of the thioxanthone compound include 2,4-diethylthioxanthone (MW: 268), 2-isopropylthioxanthone (MW: 254), and 2-chlorothioxanthone (MW: 248).

Furthermore, as the aromatic ketone (a), an α-hydroxyketone compound (including an α-hydroxyalkylphenone compound), an α-aminoketone compound (including an α-aminoalkylphenone compound), and a ketal compound are preferable. Specific examples include 2-hydroxy-1-{4-[4-(2-hydroxy-2-methylpropionyl)benzyl]phenyl}-2-methyl-propan-1-one (MW: 340.4), 2-methyl-1-[4-(methylthio)phenyl]-2-morpholinopropan-1-one (MW: 279.4), 2-benzyl-2-dimethylamino-1-(4-morpholinophenyl)butanone-1 (MW: 366.5), 2,2-dimethoxy-1,2-diphenylethan-1-one (MW: 256.3), 1-[4-(2-hydroxyethoxy)phenyl]-2-hydroxy-2-methyl-1-propan-1-one (IRGACURE 2959, MW: 224.3), 2-hydroxy-2-methyl-1-phenylpropan-1-one (DAROCUR 1173, MW: 164), 1-hydroxycyclohexyl phenyl ketone (MW: 204), and 2,2-dimethoxy-1,2-diphenylethane.

In the present invention, the acylphosphine compound (b) is preferably an acylphosphine oxide compound.

Examples of the acylphosphine oxide compound include a compound having a structure represented by Formula (7) or (8).

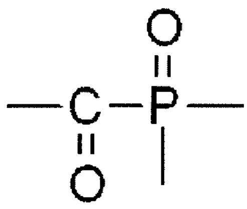

Formula (7)

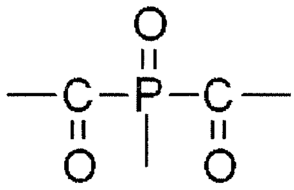

Formula (8)

The acylphosphine oxide compound is particularly preferably one having a chemical structure represented by Formula (9) or (10).

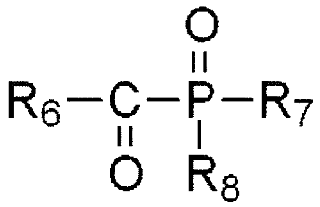

Formula (9)

(In the formula, $R_6$, $R_7$, and $R_8$ denote an aromatic hydrocarbon group, which may have a methyl group or an ethyl group as a substituent.)

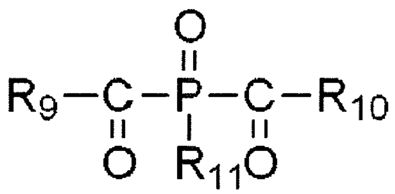

Formula (10)

(In the formula, $R_9$, $R_{10}$, and $R_{11}$ denote an aromatic hydrocarbon group, which may have a methyl group or an ethyl group as a substituent.)

As the acylphosphine oxide compound, a monoacylphosphine oxide compound, a bisacylphosphine oxide compound, etc. may be used, and as the monoacylphosphine oxide compound, a known monoacylphosphine oxide compound may be used. Examples thereof include monoacylphosphine oxide compounds described in JP-B-60-8047 and JP-B-63-40799.

Specific examples thereof include methyl isobutyrylmethylphosphinate (MW: 164.1), methyl isobutyrylphenylphosphinate (MW: 226.2), methyl pivaloylphenylphosphinate (MW: 240.2), methyl 2-ethylhexanoylphenylphosphinate (MW: 270.3), isopropyl pivaloylphenylphosphinate (MW: 268.3), methyl p-tolylphenylphosphinate (MW: 274.3), methyl *o*-tolylphenylphosphinate (MW: 274.3), methyl 2,4-dimethylbenzoylphenylphosphinate (MW: 288.3), isopropyl *p-t*-butylbenzoylphenylphosphinate (MW: 344.4), methyl acryloylphenylphosphinate (MW: 210.2), isobutyryldiphenylphosphine oxide (MW: 272.3), 2-ethylhexanoyldiphenylphosphine oxide (MW: 328.4), *o*-tolyldiphenylphosphine oxide (MW: 320.3), *p-t*-butylbenzoyldiphenylphosphine oxide (MW: 350.4), 3-pyridylcarbonyldiphenylphosphine oxide (MW: 307.3), acryloyldiphenylphosphine oxide (MW: 256.2), benzoyldiphenylphosphine oxide (MW: 306.3), vinyl pivaloylphenylphosphinate (MW: 236.3), adipoyl-bis-diphenylphosphine oxide (MW: 514.3), pivaloyldiphenylphosphine oxide (MW: 286.3), *p*-tolyldiphenylphosphine oxide (MW: 320.3), 4-(*t*-butyl)benzoyldiphenylphosphine oxide (MW: 362.4), terephthaloyl-bis-diphenylphosphine oxide (MW: 534.5), 2-methylbenzoyldiphenylphosphine oxide (MW: 320.3), 2-methyl-2-ethylhexanoyldiphenylphosphine oxide (MW: 342.4), 1-methylcyclohexanoyldiphenylphosphine oxide (MW: 326.4), and 2,4,6-trimethylbenzoyldiphenylphosphine oxide (MW: 348.4).

As the bisacylphosphine oxide compound, a known bisacylphosphine oxide compound may be used. Examples

thereof include bisacylphosphine oxide compounds described in JP-A-3-101686, JP-A-5-345790, and JP-A-6-298818.

Specific examples thereof include bis(2,6-dichlorobenzoyl)phenylphosphine oxide (MW: 472.1), bis(2,6-dichlorobenzoyl)-2,5-dimethylphenylphosphine oxide (MW: 500.1), bis(2,6-dichlorobenzoyl)-4-ethoxyphenylphosphine oxide (MW: 516.1), bis(2,6-dichlorobenzoyl)-4-propylphenylphosphine oxide (MW: 514.2), bis(2,6-dichlorobenzoyl)-2-naphthylphosphine oxide (MW: 522.2), bis(2,6-dichlorobenzoyl)-1-naphthylphosphine oxide (MW: 522.2), bis(2,6-dichlorobenzoyl)-4-chlorophenylphosphine oxide (MW: 506.5), bis(2,6-dichlorobenzoyl)-2,4-dimethoxyphenylphosphine oxide (MW: 532.1), bis(2,6-dichlorobenzoyl)decylphosphine oxide (MW: 536.3), bis(2,6-dichlorobenzoyl)-4-octylphenylphosphine oxide (MW: 584.3), bis(2,4,6-trimethylbenzoyl)phenylphosphine oxide (MW: 418.5), bis(2,4,6-trimethylbenzoyl)-2,5-dimethylphenylphosphine oxide (MW: 446.5), bis(2,6-dichloro-3,4,5-trimethoxybenzoyl)-2,5-dimethylphenylphosphine oxide (MW: 632.3), bis(2,6-dichloro-3,4,5-trimethoxybenzoyl)-4-ethoxyphenylphosphine oxide (MW: 696.3), bis(2-methyl-1-naphthoyl)-2,5-dimethylphenylphosphine oxide (MW: 490.5), bis(2-methyl-1-naphthoyl)-4-ethoxyphenylphosphine oxide (MW: 506.5), bis(2-methyl-1-naphthoyl)-2-naphthylphosphine oxide (MW: 512.5), bis(2-methyl-1-naphthoyl)-4-propylphenylphosphine oxide (MW: 504.6), bis(2-methyl-1-naphthoyl)-2,5-dimethylphenylphosphine oxide (MW: 490.5), bis(2-methoxy-1-naphthoyl)-4-ethoxyphenylphosphine oxide (MW: 506.5), bis(2-chloro-1-naphthoyl)-2,5-dimethylphenylphosphine oxide (MW: 531.4), and bis(2,6-dimethoxybenzoyl)-2,4,4-trimethylpentylphosphine oxide (MW: 426.5).

Among them, preferred examples of the acylphosphine oxide compound in the present invention include bis(2,4,6-trimethylbenzoyl)phenylphosphine oxide (IRGACURE 819: manufactured by Ciba Specialty Chemicals, MW: 418.5), bis(2,6-dimethoxybenzoyl)-2,4,4-trimethylpentylphenylphosphine oxide (MW: 426.5), and 2,4,6-trimethylbenzoyldiphenylphosphine oxide (Darocur TPO: manufactured by Ciba Specialty Chemicals, Lucirin TPO: manufactured by BASF, MW: 348.4).

As the aromatic onium salt compound (c), there can be cited aromatic onium salts of elements of Groups 15, 16, and 17 of the periodic table, specifically, N, P, As, Sb, Bi, O, S, Se, Te, and I. Examples thereof include iodonium salts described in EP No. 104143, US Pat. No. 4837124, JP-A-2-150848, and JP-A-2-96514, diazonium salts (optionally substituted benzenediazoniums, etc.) described in EP Nos. 370693, 233567, 297443, 297442, 279210, and 422570, US Pat. Nos. 3902144, 4933377, 4760013, 4734444, and 2833827, diazonium salt resins (diazodiphenylamine formaldehyde resins, etc.), N-alkoxypyridinium salts, etc. (e.g. those described in US Pat. No. 4,743,528, JP-A-63-138345, JP-A-63-142345, JP-A-63-142346, and JP-B-46-42363; specific examples thereof include 1-methoxy-4-phenylpyridinium tetrafluoroborate); furthermore, compounds described in JP-B-52-147277, 52-14278, and 52-14279 may suitably be used. A radical or an acid is formed as an active species.

As the organic peroxide (d), almost all organic compounds having at least one oxygen-oxygen bond per molecule can be cited, and preferred examples thereof include peroxide ester compounds such as 3,3',4,4'-tetra(*t*-butylperoxycarbonyl)benzophenone (MW: 646.7), 3,3',4,4'-tetra(*t*-amylperoxycarbonyl)benzophenone (MW: 702.8), 3,3',4,4'-tetra(*t*-hexylperoxycarbonyl)benzophenone (MW: 758.9), 3,3',4,4'-tetra(*t*-octylperoxycarbonyl)benzophenone (MW: 823.1), 3,3',4,4'-tetra(cumylperoxycarbonyl)benzophenone (MW: 895.0), 3,3',4,4'-tetra(p-isopropylcumylperoxycarbonyl)benzophenone (MW: 1063.3), and di-*t*-butyldiperoxyisophthalate (MW: 310.3).

As the hexaarylbiimidazole compound (f), there can be cited lophine dimers described in JP-B-45-37377 and JP-B-44-86516, and examples thereof include 2,2'-bis(*o*-chlorophenyl)-4,4',5,5'-tetraphenylbiimidazole (MW: 659.6), 2,2'-bis(*o*-bromophenyl)-4,4',5,5'-tetraphenylbiimidazole (MW: 748.5), 2,2'-bis(*o*,*p*-dichlorophenyl)-4,4',5,5'-tetraphenylbiimidazole (MW: 732.5), 2,2'-bis(*o*-chlorophenyl)-4,4',5,5'-tetra(*m*-methoxyphenyl)biimidazole (MW: 779.7), 2,2'-bis(*o*,*o*'-dichlorophenyl)-4,4',5,5'-tetraphenylbiimidazole (MW: 728.5), 2,2'-bis(*o*-nitrophenyl)-4,4',5,5'-tetraphenylbiimidazole (MW: 648.7), and 2,2'-bis(*o*-methylphenyl)-4,4',5,5'-tetraphenylbiimidazole (MW: 618.8).

As the ketoxime ester compound (g), there can be cited 3-benzoyloxyiminobutan-2-one (MW: 205.2), 3-acetoxyiminobutan-2-one (MW: 143.1), 3-propionyloxyiminobutan-2-one (MW: 157.2), 2-acetoxyiminopentan-3-one (MW: 157.2), 2-acetoxyimino-1-phenylpropan-1-one (MW: 205.2), 2-benzoyloxyimino-1-phenylpropan-1-one (MW: 267.3), 3-p-toluenesulfonyloxyiminobutan-2-one (MW: 255.3), and 2-ethoxycarbonyloxyimino-1-phenylpropan-1-one (MW: 235.2).

Examples of the borate compound (h) include compounds described in US Pat. Nos. 3,567,453 and 4,343,891, and EP Nos. 109,772 and 109,773.

Examples of the azinium salt compound (i) include N-O bond-containing compounds described in JP-A-63-138345, JP-A-63-142345, JP-A-63-142346, JP-A-63-143537, and JP-B-46-42363.

Examples of the metallocene compound (j) include titanocene compounds described in JP-A-59-152396, JP-A-61-151197, JP-A-63-41484, JP-A-2-249, and JP-A-2-4705, and iron-arene complexes described JP-A-1-304453 and JP-A-1-152109.

Specific examples of the titanocene compound include dicyclopentadienyl-Ti-dichloride (MW: 249.0), dicyclopentadienyl-Ti-bis-phenyl (MW: 332.3), di-cyclopentadienyl-Ti-bis-2,3,4,5,6-pentafluorophen-1-yl (MW: 512.2), dicyclopentadienyl-Ti-bis-2,3,5,6-tetrafluorophen-1-yl (MW: 476.2), dicyclopentadienyl-Ti-bis-2,4,6-trifluorophen-1-yl (MW: 440.2), dicyclopentadienyl-Ti-2,6-difluorophen-1-yl (MW: 404.2), dicyclopentadienyl-Ti-bis-2,4-difluorophen-1-yl (MW:

404.2), dimethylcyclopentadienyl-Ti-bis-2,3,4,5,6-pentafluorophen-1-yl (MW: 534.2), dimethylcyclopentadienyl-Ti-bis-2,3,5,6-tetrafluorophen-1-yl (MW: 498.2), dimethylcyclopentadienyl-Ti-bis-2,4-difluorophen-1-yl (MW: 426.2), bis(cyclopentadienyl)-bis(2,6-difluoro-3-(pyrr-1-yl)phenyl)titanium (MW: 534.4), and bis(cyclopentadienyl)bis[2,6-difluoro-3-(methylsulfonamido)phenyl]titanium (MW: 614.5).

Examples of the active ester compound (k) include nitrobenzyl ester compounds described in EP Nos. 0290750, 046083, 156153, 271851, and 0388343, US Pat. Nos. 3901710 and 4181531, JP-A-60-198538, and JP-A-53-133022, iminosulfonate compounds described in EP Nos. 0199672, 84515, 199672, 044115, and 0101122, US Pat. Nos. 4618564, 4371605, and 4431774, JP-A-64-18143, JP-A-2-245756, and JP-A-4-365048, and compounds described in JP-B-62-6223, JP-B-63-14340, and JP-A-59-174831.

Preferred examples of the compound (l) having a carbon-halogen bond include a compound described in Wakabayashi et. al, Bull. Chem. Soc. Japan, 42, 2924 (1969), a compound described in British Patent No. 1388492, a compound described in JP-A-53-133428, and a compound described in German Patent No. 3337024.

Examples further include a compound described in F. C. Schaefer et al., J. Org. Chem., 29, 1527 (1964), a compound described in JP-A-62-58241, a compound described in JP-A-5-281728. Examples further include a compound described in German Pat. No. 2641100, a compound described in German Pat. No. 3333450, compounds described in German Pat. No. 3021590, and compounds described in German Pat. No. 3021599.

Among (a) to (m) above, a polymerization initiator having a molecular weight of at least 250 may suitably be used, and among (a) to (m) above any polymerization initiator having a molecular weight of less than 250 may be used in combination.

The ink composition of the present invention preferably comprises at least one photopolymerization initiator selected from the group consisting of an acylphosphine oxide compound, a benzophenone compound, an α-hydroxyketone compound, an α-aminoketone compound, and a ketal compound, more preferably comprises at least one photopolymerization initiator selected from the group consisting of an acylphosphine oxide compound, an α-aminoketone compound, and an α-hydroxyketone compound, and particularly preferably comprises at least an acylphosphine oxide compound. It is also preferable to use an acylphosphine oxide compound and another polymerization initiator in combination.

Due to the above constitution, an ink composition having excellent curability and blocking resistance is obtained.

The content of the photopolymerization initiator is preferably 0.01 to 35 wt% relative to the total mass of polymerizable compound in the ink composition, more preferably 0.5 to 20 wt%, and yet more preferably 1.0 to 15 wt%. When it is at least 0.01 wt%, the composition can be sufficiently cured, and when it is no greater than 35 wt%, a cured film having a uniform degree of cure can be obtained.

When a sensitizer, which is described later, is used in the ink composition of the present invention, the total amount of photopolymerization initiator used is preferably 200:1 to 1:200 as a ratio by weight relative to the sensitizer, that is, photopolymerization initiator:sensitizer; it is more preferably 50:1 to 1:50, and yet more preferably 20:1 to 1:5.

The ink composition of the present invention may contain, as the polymerization initiator, a compound functioned as a sensitizer (a sensitizer) in order to promote decomposition of the above-mentioned polymerization initiator by absorbing specific actinic radiation, in particular when used for inkjet recording.

The sensitizer absorbs specific actinic radiation and attains an electronically excited state. The sensitizer in the electronically excited state causes actions such as electron transfer, energy transfer, or heat generation upon contact with the polymerization initiator. This causes the polymerization initiator to undergo a chemical change and decompose, thus forming a radical, an acid, or a base.

As a sensitizer in the ink composition of the present invention, it is preferable to use a sensitizing dye.

Preferred examples of the sensitizing dye include those that belong to compounds below and have an adsorption wavelength in the region of 350 nm to 450 nm.

Polycyclic aromatic compounds (e.g. pyrene, perylene, triphenylene), xanthenes (e.g. fluorescein, eosin, erythrosine, rhodamine B, rose bengal), cyanines (e.g. thiacarbocyanine, oxacarbocyanine), merocyanines (e.g. merocyanine, carbomerocyanine), thiazines (e.g. thionine, methylene blue, toluidine blue), acridines (e.g. acridine orange, chloroflavin, acriflavine), anthraquinones (e.g. anthraquinone), squaryliums (e.g. squarylium), coumarins (e.g. 7-diethylamino-4-methylcoumarin), and thioxanthones (e.g. thioxanthone, isopropylthioxanthone, diethylthioxanthone).

Furthermore, examples of the sensitizer include compounds described in paragraphs 0091 to 0104 of JP-A-2011-32348.

With regard to the sensitizer, one type may be used on its own or two or more types may be used in combination.

The content of the sensitizer in the ink composition of the present invention is selected as appropriate according to the intended purpose, and is preferably 0.05 to 4 wt% relative to the total mass of the composition.

(Component H) Polymerizable compound other than Component A to Component D

It is possible for the inkjet ink composition of the present invention to use in combination (Component H) a polymerizable compound other than Component A to Component D, but it is preferable for it not to comprise Component H.

As Component H, a known polymerizable compound may be used, and examples include compounds described in paragraphs 0038 to 0042 of JP-A-2011-32348.

When considering vacuum forming suitability, a design in which the crosslink density in a film is low is necessary. When curability and vacuum forming suitability are taken into consideration, Component H is preferably a monofunctional (meth)acrylate compound or a monofunctional (meth)acrylamide compound, and from the viewpoint of storage stability it is particularly preferably a monofunctional (meth)acrylate compound.

The content of Component H is less than 10 mass% relative to the total mass of polymerizable compounds, excluding Component D, in the ink composition, preferably less than 5 mass%, more preferably less than 2 mass%, and particularly preferably zero.

(Component I) Dispersant

The inkjet ink composition comprises (Component I) a dispersant in order to stably disperse the pigment in the ink composition.

As the dispersant that can be used in the present invention, a polymeric dispersant is preferable. The 'polymeric dispersant' referred to in the present invention means a dispersant having a weight-average molecular weight of 1,000 or greater.

Examples of the polymeric dispersant include DisperBYK-101, DisperBYK-102, DisperBYK-103, DisperBYK-106, DisperBYK-111, DisperBYK-161, DisperBYK-162, DisperBYK-163, DisperBYK-164, DisperBYK-166, DisperBYK-167, DisperBYK-168, DisperBYK-170, DisperBYK-171, DisperBYK-174, and DisperBYK-182 (all manufactured by BYK Chemie), EFKA4010, EFKA4046, EFKA4080, EFKA5010, EFKA5207, EFKA5244, EFKA6745, EFKA6750, EFKA7414, EFKA745, EFKA7462, EFKA7500, EFKA7570, EFKA7575, and EFKA7580 (all manufactured by EFKA Additives), Disperse Aid 6, Disperse Aid 8, Disperse Aid 15, and Disperse Aid 9100 (manufactured by San Nopco Limited); various types of Solsperse dispersants such as Solsperse 3000, 5000, 9000, 12000, 13240, 13940, 17000, 22000, 24000, 26000, 28000, 32000, 36000, 39000, 41000, and 71000 (manufactured by Avecia); Adeka Pluronic L31, F38, L42, L44, L61, L64, F68, L72, P95, F77, P84, F87, P94, L101, P103, F108, L121, and P-123 (manufactured by Adeka Corporation), Isonet S-20 (manufactured by Sanyo Chemical Industries, Ltd.), and Disparlon KS-860, 873SN, and 874 (polymeric dispersant), #2150 (aliphatic poly carboxylic acid), and #7004 (polyether ester type) (manufactured by Kusumoto Chemicals, Ltd.).

The content of the dispersant in the ink composition is appropriately selected according to the intended purpose, and is preferably 0.05 to 15 mass% relative to the mass of the entire ink composition.

<Other component>

The inkjet ink composition of the present invention may comprise another component other than the above-mentioned component as necessary.

Examples of the other component include a sensitizer, a cosensitizer, a surfactant, a UV absorber, an antioxidant, an antifading agent, a conductive salt, a solvent, and a basic compound.

-Cosensitizer-

The ink composition of the present invention preferably comprises a cosensitizer (hereinafter, also called a 'supersensitizer'). In the present invention, the cosensitizer has the function of further improving the sensitivity of the sensitizing dye to actinic radiation or the function of suppressing inhibition by oxygen of polymerization of a polymerizable compound, etc.

Examples of such a cosensitizer include amines such as compounds described in M. R. Sander et al., 'Journal of Polymer Society', Vol. 10, p. 3173 (1972), JP-B-44-20189, JP-A-51-82102, JP-A-52-134692, JP-A-59-138205, JP-A-60-84305, JP-A-62-18537, JP-A-64-33104, and Research Disclosure No. 33825, and specific examples thereof include triethanolamine, ethyl *p*-dimethylaminobenzoate, *p*-formyldimethylaniline, and *p*-methylthiodimethylaniline.

Other examples of the cosensitizer include thiols and sulfides such as thiol compounds described in JP-A-53-702, JP-B-55-500806, and JP-A-5-142772, and disulfide compounds of JP-A-56-75643, and specific examples thereof include 2-mercaptobenzothiazole, 2-mercaptobenzoxazole, 2-mercaptobenzimidazole, 2-mercapto-4(3H)-quinazoline, and β-mercaptonaphthalene.

Yet other examples of the cosensitizer include amino acid compounds (e.g. *N*-phenylglycine, etc.), organometallic compounds described in JP-B-48-42965 (e.g. tributyltin acetate, etc.), hydrogen-donating compounds described in JP-B-55-34414, sulfur compounds described in JP-A-6-308727 (e.g. trithiane, etc.), phosphorus compounds described in JP-A-6-250387 (diethylphosphite, etc.), and Si-H and Ge-H compounds described in JP-A-8-54735 etc.

The content of the cosensitizer in the ink composition is appropriately selected according to the intended

purpose, and is preferably 0.05 to 4 mass% relative to the mass of the entire ink composition.

-Surfactant-

The ink composition that can be used in the present invention may have a surfactant added for imparting stable discharge properties over a long period of time.

As a surfactant, those described in JP-A-62-173463 and JP-A-62-183457 can be cited. Examples thereof include an anionic surfactant such as a dialkyl sulfosuccinate salt, an alkylnaphthalene sulfonic acid salt, or a fatty acid salt, a nonionic surfactant such as a polyoxyethylene alkyl ether, a polyoxyethylene alkyl allyl ether, an acetylene glycol, or a polyoxyethylene-polyoxypropylene block copolymer, and a cationic surfactant such as an alkylamine salt or a quaternary ammonium salt.

The content of the surfactant in the ink composition is appropriately selected according to the intended purpose, and is preferably 0.0001 to 1 mass% relative to the mass of the entire ink composition.

-UV absorber-

A UV absorber may be used from the viewpoint of improving the weather resistance of an image obtained and preventing discoloration.

The UV absorbers include benzotriazole compounds described in JP-A-58-185677, JP-A-61-190537, JP-A-2-782, JP-A-5-197075 and JP-A-9-34057; benzophenone compounds described in JP-A-46-2784, JP-A-5-194483 and US Pat. No. 3,214,463; cinnamic acid compounds described in JP-B-48-30492, JP-B-56-21141 and JP-A-10-88106; triazine compounds described in JP-A-4-298503, JP-A-8-53427, JP-A-8-239368, JP-A-10-182621 and JP-W-8-501291 (the term "JP-W" as used herein means an unexamined published international patent application); compounds described in Research Disclosure No. 24239; and compounds represented by stilbene and benzoxazole compounds, which absorb ultraviolet rays to emit fluorescence, the so-called fluorescent brightening agents.

The amount thereof added is appropriately selected according to the intended application, and it is preferably 0 to 5 mass% relative to the mass of the entire ink composition.

-Antioxidant-

In order to improve the stability of the ink composition, an antioxidant may be added.

Examples of the antioxidant include those described in Laid-open European Patent Nos. 223739, 309401, 309402, 310551, 310552, and 459416, Laid-open German Patent No. 3435443, JP-A-54-48535, JP-A-62-262047, JP-A-63-113536, JP-A-63-163351, JP-A-2-262654, JP-A-2-71262, JP-A-3-121449, JP-A-5-61166, JP-A-5-119449, and US Pat. Nos. 4,814,262 and 4,980,275.

The amount thereof added is appropriately selected according to the intended application, and it is preferably 0 to 5 mass% relative to the mass of the entire ink composition.

-Antifading agent-

The ink composition of the present invention may employ various organic and metal complex antifading agents.

The organic antifading agents include hydroquinones, alkoxyphenols, dialkoxyphenols, phenols, anilines, amines, indanes, chromans, alkoxyanilines, and heterocycles.

The metal complex antifading agents include nickel complexes and zinc complexes. More specifically, there can be used compounds described in patents cited in Research Disclosure, No. 17643, Items VII-I to J, ibid., No.15162, ibid., No.18716, page 650, left-hand column, ibid., No. 36544, page 527, ibid., No. 307105, page 872, and ibid., No. 15162, and compounds contained in general formulae and compound examples of typical compounds described in JP-A-62-21572, pages 127 to 137.

The amount thereof added is appropriately selected according to the intended application, and it is preferably 0 to 5 mass% relative to the mass of the entire ink composition.

-Solvent-

It is also effective to add a trace amount of organic solvent to the ink composition of the present invention in order to improve the adhesion to a recording medium.

Examples of the solvent include ketone-based solvents such as acetone, methyl ethyl ketone, and diethyl ketone, alcohol-based solvents such as methanol, ethanol, 2-propanol, 1-propanol, 1-butanol, and tert-butanol, chlorine-based solvents such as chloroform and methylene chloride, aromatic-based solvents such as benzene and toluene,

ester-based solvents such as ethyl acetate, butyl acetate, and isopropyl acetate, ether-based solvents such as diethyl ether, tetrahydrofuran, and dioxane, and glycol ether-based solvents such as ethylene glycol monomethyl ether and ethylene glycol dimethyl ether.

In this case, it is effective if the amount thereof added is in a range that does not cause problems with the solvent resistance or the VOC (Volative Organic Compound), and the amount thereof is preferably 0.1 to 5 mass% relative to the total amount of the ink composition, and more preferably 0.1 to 3 mass%.

The ink composition of the present invention may contain, for the purpose of controlling discharge properties, a conductive salt such as potassium thiocyanate, lithium nitrate, ammonium thiocyanate, or dimethylamine hydrochloride.

A basic compound may be added to the ink composition of the present invention from the viewpoint of improving the storage stability of the ink composition. The basic compound that can be used in the present invention is a known basic compound, and preferred examples thereof include a basic inorganic compound such as an inorganic salt or a basic organic compound such as an amine.

In addition to the above, the composition may contain as necessary, for example, a leveling additive, a matting agent, a wax for adjusting film physical properties, or a tackifier in order to improve the adhesion to a recording medium such as polyolefin or PET, the tackifier not inhibiting polymerization.

Specific examples of the tackifier include high molecular weight tacky polymers described on pp. 5 and 6 of JP-A-2001-49200 (e.g. a copolymer formed from an ester of (meth)acrylic acid and an alcohol having an alkyl group with 1 to 20 carbons, an ester of (meth)acrylic acid and an alicyclic alcohol having 3 to 14 carbons, or an ester of (meth)acrylic acid and an aromatic alcohol having 6 to 14 carbons), and a low molecular weight tackifying resin having a polymerizable unsaturated bond.

<Properties of ink>

The ink composition of the present invention has a viscosity at 25°C of preferably no more than 40 mPa·s, more preferably 5 to 40 mPa·s, and yet more preferably 7 to 30 mPa·s. Furthermore, the viscosity of the ink composition at the discharge temperature (preferably 25°C to 80°C, and more preferably 25°C to 50°C) is preferably 3 to 15 mPa·s, and more preferably 3 to 13 mPa·s. With regard to the ink composition of the present invention, it is preferable that its component ratio is appropriately adjusted so that the viscosity is in the above-mentioned range. When the viscosity at room temperature is set to be high, even when a porous recording medium is used, penetration of the ink composition into the recording medium can be prevented, and uncured monomer can be reduced. Furthermore, the ink composition spreading when droplets of the ink composition have landed can be suppressed, and as a result there is the advantage that the image quality is improved.

The surface tension of the ink composition of the present invention at 25°C is preferably 20 to 35 mN/m, and more preferably 23 to 33 mN/m. When recording is carried out on various types of recording medium such as polyolefin, PET, coated paper, and uncoated paper, from the viewpoint of spread and penetration, it is preferably at least 20 mN/m, and from the viewpoint of wettability it is preferably not more than 35 mN/m.

2. Inkjet recording method, inkjet recording device, printed material, and process for producing molded printed material

The inkjet ink composition of the present invention is suitably used for inkjet recording.

The inkjet recording method of the present invention is a method for forming an image by discharging the inkjet ink composition of the present invention onto a support (recording medium, recording material, substrate, etc.) for inkjet recording and curing the ink composition by irradiating the ink composition so discharged onto the support with actinic radiation.

More particularly, the inkjet recording method of the present invention comprises ($a^1$) a step of discharging the ink composition of the present invention onto a support and ($b^1$) a step of curing the ink composition by irradiating the ink composition so discharged with actinic radiation,

The inkjet recording method of the present invention comprises the steps ($a^1$) and ($b^1$) above and thus forms an image from the ink composition cured on the support.

The printed material of the present invention is a printed material recorded by the inkjet recording method of the present invention.

Furthermore, the ink composition of the present invention is suitably used when forming an image by an inkjet method on a support that is subjected to molding. By molding a printed material obtained by the inkjet recording method, a formed molded printed material can be produced.

More particularly, the process for producing a molded printed material of the present invention comprises ($a^2$) a step of forming an image by discharging the inkjet ink composition of the present invention onto a support by an inkjet method, ($b^2$) a step of irradiating the image thus obtained with actinic radiation so as to cure the ink composition and obtain a printed material having the image cured on the support, and ($c^2$) a step of molding the printed material. The

molding is preferably embossing, vacuum forming, pressure forming, vacuum/pressure forming, hole making, or cutting, and more preferably vacuum forming, pressure forming, vacuum/pressure forming, hole making, or cutting. The molding preferably includes at least vacuum forming.

<Support>

In the present invention, the support is not particularly limited, and a support known as a recording medium or a recording material may be used. Examples thereof include paper, paper laminated with a plastic (e.g. polyethylene, polypropylene, polystyrene, etc.), a metal plate (e.g. aluminum, zinc, copper, etc.), a plastic film (e.g. cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, polyvinylacetal, etc.), and paper or plastic film laminated or vapor-deposited with the above metal. In the present invention, as the support, a non-absorbing support may preferably be used.

A support that can be used in the present invention is not particularly limited, but in the case of molding a printed material, a known recording medium described below may be used.

Examples of the support include polyolefin-based resins such as polyethylene, polypropylene, polymethylpentene, polybutene, and an olefin-based thermoplastic elastomer, polyester resins such as polyethylene terephthalate, polybutylene terephthalate, polyethylene naphthalate, a terephthalic acid-isophthalic acid-ethylene glycol copolymer, a terephthalic acid-ethylene glycol-1,4-cyclohexanedimethanol copolymer, and a polyester-based thermoplastic elastomer, polyamide resins such as nylon-6, nylon-9, and nylon-66, fluorine-based resins such as polyvinyl fluoride, polyvinylidene fluoride, polyvinylidene trifluoride, an ethylene-ethylene tetrafluoride copolymer, and polyethylene tetrafluoride, an acrylic-based resin, polyvinyl chloride, polystyrene, and a polycarbonate.

With regard to the acrylic-based resin, for example, a resin such as polymethyl (meth)acrylate, polyethyl (meth)acrylate, polybutyl (meth)acrylate, a methyl (meth)acrylate-butyl (meth)acrylate copolymer, an ethyl (meth)acrylate-butyl (meth)acrylate copolymer, a methyl (meth)acrylatestyrene copolymer, or an acrylonitrile-butadiene-styrene copolymer (ABS resin) may be used singly or in a combination of two or more types. In particular, from the viewpoint of molding being easy and various resistance properties of a finished molded material being excellent, it is preferable to use a sheet of a resin selected from the group consisting of polystyrene, an ABS resin, an acrylic resin, polyethylene terephthalate, and a polycarbonate.

Furthermore, when the ink composition of the present invention is used, from the viewpoint of a particularly prominent effect in terms of trimming suitability being obtained, it is particularly preferable to use polycarbonate as a support.

The thickness of the support for molding in the present invention (the total thickness in the case of a laminate structure) is not particularly limited, and is preferably 0.5 to 5 mm.

The layer structure of the support may be a single layer or a laminate in which two or more layers of different types of resin are laminated.

It is possible to add an appropriate additive to the thermoplastic resin sheets as necessary. As the additive, various types of additive may be added in an appropriate amount such that they do not impair surface gloss or thermal behavior such as melting point. Examples thereof include a photostabilizer such as a benzotriazole-based, benzophenone-based, etc. UV absorber or a hindered amine-based radical scavenger, a lubricant such as a silicone resin or a wax, a colorant, a plasticizer, a heat stabilizer, an antimicrobial agent, an anti-mold agent, and an antistatic agent.

The molded printed material in the present invention may be produced by subjecting the thermoplastic resin sheet to vacuum forming, etc., and an image is formed on the support by the inkjet method prior to molding. An image is generally formed on the reverse side of a transparent sheet (side facing the mold in vacuum forming), but an image may also be formed on the opposite side. It is also possible to form an image only on said opposite side depending on the circumstances, and in this case the thermoplastic resin sheet used as a substrate is not necessarily transparent.

In the step ($a^1$) and ($b^1$) in the inkjet recording method of the present invention, an inkjet recording device described in detail below may be used.

<Inkjet recording device>

An inkjet recording device used in the inkjet recording method of the present invention is not particularly limited, and any known inkjet recording device that can achieve an intended resolution may be used. That is, any known inkjet recording device, such as a commercial product, may be used in order to discharge an inkjet ink composition onto a recording medium (support) in step ($a^1$) of the inkjet recording method and step ($a^2$) of the process for producing a molded printed material of the present invention.

The inkjet recording device that can be used in the present invention is equipped with, for example, an ink supply system, a temperature sensor, and an actinic radiation source.

The ink supply comprises, for example, a main tank containing the ink composition of the present invention, a supply pipe, an ink supply tank immediately before an inkjet head, a filter, and a piezo system inkjet head. The piezo system inkjet head may be driven so as to discharge a multisize dot of preferably 1 to 100 pL, and more preferably 8 to 30 pL, at a resolution of preferably 320 x 320 to 4,000 x 4,000dpi, more preferably 400 x 400 to 1,600 x 1,600dpi, and yet more preferably 720 x 720 dpi. Here, dpi referred to in the present invention means the number of dots per 2.54 cm.

As described above, since it is preferable for the actinic radiation curing type ink composition such as the ink composition of the present invention to be discharged at a constant temperature, a section from the ink supply tank to the inkjet head is thermally insulated and heated. A method of controlling temperature is not particularly limited, but it is preferable to provide, for example, temperature sensors at a plurality of pipe section positions, and control heating according to the ink flow rate and the temperature of the surroundings. The temperature sensors may be provided on the ink supply tank and in the vicinity of the inkjet head nozzle. Furthermore, the head unit that is to be heated is preferably thermally shielded or insulated so that the device main body is not influenced by the temperature of the outside air. In order to reduce the printer start-up time required for heating, or in order to reduce the thermal energy loss, it is preferable to thermally insulate the head unit from other sections and also to reduce the heat capacity of the entire heated unit.

When the ink composition or the inkjet recording ink composition of the present invention is discharged using the above mentioned inkjet recording device, the ink composition is preferably discharged after being heated to preferably 25°C to 80°C, and more preferably 25°C to 50°C, so as to reduce the viscosity of the ink composition to preferably 3 to 15 mPa·s, and more preferably 3 to 13 mPa·s. In particular, it is preferable to use the ink composition having an ink viscosity at 25°C of no more than 50 mPa·s since a good discharge stability can be obtained. By employing this method, high discharge stability can be realized.

The actinic radiation curing type ink composition such as the ink composition of the present invention generally has a viscosity that is higher than that of a normal ink composition or a water-based ink used for an inkjet recording ink, and variation in viscosity due to a change in temperature at the time of discharge is large. Viscosity variation in the ink composition has a large effect on changes in liquid droplet size and changes in liquid droplet discharge speed and, consequently, causes the image quality to be degraded. It is therefore necessary to maintain the ink composition discharge temperature as constant as possible. In the present invention, the control range for the temperature is preferably ±5°C of a set temperature, more preferably ±2°C of the set temperature, and yet more preferably ±1°C of the set temperature.

The step ($b^1$) of curing the discharged ink composition by irradiating the ink composition with actinic radiation, and the step ($b^2$) of irradiating the image thus obtained with actinic radiation so as to cure the ink composition and obtain a printed material having the image cured on the support are explained.

The ink composition discharged onto the support or onto the support cures upon exposure to actinic radiation. This is due to a initiating species such as a radical being generated by decomposition of the radical photopolymerization initiator contained in the ink composition of the present invention by irradiation with actinic radiation, the initiating species functioning so as to make a polymerization reaction of a polymerizable compound take place and to promote it. In this process, if a sensitizer is present together with the photopolymerization initiator in the ink composition, the sensitizer in the system absorbs actinic radiation, becomes excited, and promotes decomposition of the photopolymerization initiator by contact with the polymerization initiator, thus enabling a curing reaction with higher sensitivity to be achieved.

The actinic radiation used in this process may include $\alpha$ rays, $\gamma$ rays, an electron beam, X rays, UV rays, visible light, and IR rays. Although it depends on the absorption characteristics of the sensitizer, the peak wavelength of the actinic radiation is preferably 200 to 600 nm, more preferably 300 to 450 nm, and yet more preferably 350 to 420 nm.

Furthermore, in the present invention, the polymerization initiation system has sufficient sensitivity for low output actinic radiation. The actinic radiation is applied therefore so that the illumination intensity on the exposed surface is preferably 10 to 4,000 mW/cm$^2$, and more preferably 20 to 2,500 mW/cm$^2$.

As an actinic radiation source, a mercury lamp, a gas/solid laser, etc. are mainly used, and for curing of a UV photocuring inkjet ink composition, a mercury lamp and a metal halide lamp are widely known. However, from the viewpoint of protection of the environment, there has recently been a strong desire for mercury not to be used, and replacement by a GaN semiconductor UV light emitting device is very useful from industrial and environmental viewpoints. Furthermore, LEDs (UV-LED) and LDs (UV-LD) have small dimensions, long life, high efficiency, and low cost, and their use as a photocuring inkjet light source can be expected.

Furthermore, light-emitting diodes (LED) and laser diodes (LD) may be used as the source of actinic radiation. In particular, when a UV ray source is needed, a UV-LED or a UV-LD may be used. For example, Nichia Corporation has marketed a violet LED having a wavelength of the main emission spectrum of between 365 nm and 420 nm. Furthermore, when a shorter wavelength is needed, US Pat. No. 6,084,250 discloses an LED that can emit actinic radiation whose wavelength is centered between 300 nm and 370 nm. Furthermore, another violet LED is available, and irradiation can be carried out with radiation of a different UV bandwidth. The actinic radiation source particularly preferable in the present invention is a UV-LED, and a UV-LED having a peak wavelength at 350 to 420 nm is particularly preferable.

The maximum illumination intensity of the LED on a recording medium is preferably 10 to 2,000 mW/cm$^2$, more

preferably 20 to 1,000 mW/$cm^2$, and particularly preferably 50 to 800 mJ/$cm^2$.

The ink composition of the present invention is desirably exposed to such actinic radiation for preferably 0.01 to 120 sec., and more preferably 0.1 to 90 sec.

Irradiation conditions and a basic method for irradiation with actinic radiation are disclosed in JP-A-60-132767. Specifically, a light source is provided on either side of a head unit that includes an ink discharge device, and the head unit and the light source are made to scan by a so-called shuttle system. Irradiation with actinic radiation is carried out after a certain time (preferably 0.01 to 0.5 sec., more preferably 0.01 to 0.3 sec., and yet more preferably 0.01 to 0.15 sec.) has elapsed from when the ink composition has landed. By controlling the time from the ink composition landing to irradiation so as to be a minimum in this way, it becomes possible to prevent the ink composition that has landed on a recording medium from spreading before being cured. Furthermore, since the ink composition can be exposed before it reaches a deep area of a porous recording medium that the light source cannot reach, it is possible to prevent monomer from remaining un reacted.

Furthermore, curing may be completed using another light source that is not driven. WO99/54415 discloses, as an irradiation method, a method employing an optical fiber and a method in which a collimated light source is incident on a mirror surface provided on a head unit side face, and a recorded area is irradiated with UV light, and such a curing method may be applied to the inkjet recording method and the process for producing a molded printed material of the present invention.

By employing such a method as described above, it is possible to maintain a uniform dot diameter for landed ink composition even for various types of a support having different surface wettability, thereby improving the image quality. In order to obtain a color image, it is preferable to superimpose colors in order from those with a high lightness. By superimposing ink compositions in order from one with high lightness, it is easy for radiation to reach a lower ink composition, the curing sensitivity is good, the amount of residual monomer decreases, and an improvement in adhesion can be expected. Furthermore, although it is possible to discharge all colors and then expose them at the same time, it is preferable to expose one color at a time from the viewpoint of promoting curing.

<Ink set>

The inkjet recording method and the process for producing a molded printed material of the present invention may suitably employ the ink set comprising at least one ink composition of the present invention. The order in which colored ink compositions are discharged is not particularly limited, but it is preferable to apply to a recording medium from a colored ink composition having a high lightness; when the ink compositions of yellow, cyan, magenta, and black are used, they are preferably applied on top of the recording medium in the order yellow → cyan → magenta → black. Furthermore, when white is additionally used, they are preferably applied on top of the recording medium in the order white → yellow → cyan → magenta → black. Moreover, the present invention is not limited thereto, and an ink set comprising a total of seven colors, that is, light cyan, light magenta, cyan, magenta, black, white, and yellow dark ink compositions may preferably be used, and in this case they are applied on top of the recording medium in the order white → light cyan → light magenta → yellow → cyan → magenta → black.

In this way, the ink composition of the present invention is cured by irradiation with actinic radiation in high sensitivity to thus form an image on the surface of the recording medium.

When using as an ink set comprising plurality of ink compositions having a different color, the ink set is not particularly limited as long as it is an ink set having two or more types of ink compositions in combination, the ink set comprising in combination at least one ink composition of the present invention and another ink composition of the present invention or an ink composition other than one of the present invention, and it is preferable for the ink set to comprise at least one ink composition of the present invention having a color selected from cyan, magenta, yellow, black, white, light magenta, and light cyan.

Furthermore, the ink set of the present invention may be suitably used in the inkjet recording method of the present invention.

In order to obtain a full color image using the ink composition of the present invention, it is preferable to use, as the ink set of the present invention, an ink set comprising at least four dark ink compositions of yellow, cyan, magenta, and black, it is more preferable to use an ink set comprising in combination five dark ink compositions of yellow, cyan, magenta, black, and white and at least one ink composition of the present invention, and it is yet more preferable to use an ink set comprising in combination five dark ink compositions of yellow, cyan, magenta, black, and white and two, that is, light cyan, and light magenta ink compositions.

The 'dark ink composition' referred to in the present invention means an ink composition for which the content of the colorant exceeds 1 wt % of the entire ink composition. The colorant is not particularly limited; a known colorant may be used, and examples thereof include a pigment and an oil-soluble dye.

The dark ink composition and the light ink composition employ colorants of similar colors, the ratio of the colorant concentration of the dark ink composition to the colorant concentration of the light ink composition is preferably dark ink

composition:light ink composition = 15:1 to 4:1, more preferably 12:1 to 4:1, and yet more preferably 10:1 to 4.5:1. When the ratio is in the above-mentioned range, a vivid full color image with little feeling of grain can be obtained.

<Molding>

The printed material formed by using the inkjet ink composition of the present invention is suitable for molding processing by embossing, vacuum forming, pressure forming, vacuum/pressure forming, hole making, or cutting, and particularly suitable for molding processing by vacuum forming, and trimming, such as hole making and cutting, etc., after vacuum forming. As a system for molding a printed material, a known system may be used, and the system may be integral with the inkjet recording system or separate therefrom.

The process for producing a molded printed material of the present invention preferably comprises (1) a step of forming an image by discharging the inkjet ink composition of the present invention by an inkjet method onto a substrate having a thickness of 0.5 to 3 mm selected from the group consisting of polycarbonate, polystyrene, an acrylic resin, polyethylene terephthalate, and an acrylonitrile-butadiene-styrene copolymer, (2) a step of curing the ink composition by irradiating the obtained image with actinic radiation to thus obtain a printed material having a cured image above the support, (3) a step of heating the printed material in a range of 70°C to 200°C, and (4) a step of inserting the heated printed material into a mold and molding it into a three-dimensional structure by means of at least vacuum forming to thus obtain a molded printed material, and preferably further comprises (5) a step of subjecting the molded printed material to trimming.

Step (1) and step (2) are steps in which the above steps are further limited, and preferred embodiments are also the same.

Step (3) is a step of heating a printed material at 70°C to 200°C to obtain stretchability for the printed material in order to carry out vacuum forming. The heating temperature may be selected according to the support or the cured ink image such that it is a temperature at which hardness or stretchability suitable for vacuum forming is acquired.

Step (4) is a step of molding the printed material heated by step (3) into a 3D structure by inserting it into a mold and carrying out vacuum forming. Furthermore, the printed material may be subjected not only to vacuum forming but also to embossing or pressure forming, at the same time as vacuum forming or sequentially. The printed material that is obtained by use of the inkjet ink composition of the present invention has excellent vacuum forming suitability, and in particular even when it is subjected to vacuum forming where the stretching ratio is larger, the occurrence of cracking or whitening is further suppressed.

Step (5) is a step of subjecting the 3D molded printed material obtained by step (4) to trimming such as hole making or cutting. The molded printed material obtained by use of the inkjet ink composition of the present invention has suppressed post-molding cracking even when subjected to trimming after vacuum forming.

<Vacuum forming, pressure forming, and vacuum/pressure forming>

Vacuum forming is a method in which a support having an image formed thereon is preheated to a temperature at which it can be thermally deformed, and molding is carried out by pressing it against a mold and cooling while sucking it toward the mold by means of vacuum and stretching it; pressure forming is a method in which a support having an image formed thereon is preheated to a temperature at which it can be thermally deformed, and molding is carried out by pressing it against a mold by applying pressure from the side opposite to the mold and cooling. Vacuum/pressure forming is a method in which molding is carried out by applying a vacuum and pressure at the same time.

In detail, the 'Thermal Molding' section described on p.766 to 768 of 'Kobunshi Daijiten' (Polymer Dictionary) (Maruzen) and publications cited in the section may be referred to. The processing temperature is appropriately selected depending on the type of the support, and it is preferable to carry out molding when the support temperature is 70°C to 200°C, more preferably 80°C to 200°C, and yet more preferably 80°C to 190°C. In the above-mentioned range, it is possible to carry out processing in which there is little change in the color of the image and release properties from a mold is excellent.

<Trimming>

Trimming is removing an unwanted portion of a molded printed material by hole making, cutting, etc.

In particular, when a molded printed material is obtained by vacuum forming using the inkjet ink composition of the present invention, even after vacuum forming, the occurrence of post-molding cracking such as cracking or peeling of a film during trimming (hole making, cutting, etc.) can be suppressed.

The hole making referred to here is a process in which a hole of any shape such as a pattern or a character is made in a printed material, etc., and there are methods involving punching using a conventionally known press, etc., hole making using a drill, etc., and hole making using a laser. Among them, punching using a press, etc. is suitable when

molding a large number of products of the same kind.

When a printed material or a molded printed material obtained by use of the inkjet ink composition of the present invention is subjected to trimming, it is preferably carried out at a temperature of 20°C to 150°C, more preferably at a temperature of 20°C to 100°C, and particularly preferably at a temperature of 25°C to 60°C. When in this range, change in color of the image is suppressed, and release properties from a mold is excellent.

<Embossing>

The printed material or the molded printed material of the present invention may be subjected to embossing.

Embossing is a process in which a three-dimensional feel is given by indenting a printed material, etc. in a desired shape such as a pattern or a letter, and may be carried out using a roller, a press, etc.

Examples of embossing include a hot/cold pressing method, and a method described in JP-A-10-199360, etc. may be referred to.

One example of an embossing system employing the hot/cold pressing method is shown below.

In the embossing system, a lower platen and an upper platen are disposed so that they can move toward and away from each other. A plate-shaped heater is fixed on top of the lower platen, and a plate-shaped heater is also fixed to a lower face of the upper platen. This enables a support to be hot pressed while it is heated. In this hot pressing machine, the plate-shaped heater on the lower platen is equipped with a mold having a projection following a predetermined embossing shape, and a mold having a recess that conforms to the shape of the projection is mounted so as to be in contact with the heater fixed to the lower face of the upper platen. A support having an image formed thereon is positioned, a cushion sheet is placed between the support and the mold with the recess, and the support and the cushion sheet are pressed between the upper platen and the lower platen by lowering the upper platen, etc. A pressure applied in this hot pressing step is, for example, 30 tons, and the heating temperature from the plate-shaped heater is, for example, 170°C. The upper platen is pressed against the lower platen, the support and the cushion sheet are sandwiched between the molds, and this hot pressing is maintained for about 3 minutes. The support is heated by the heaters via the molds, and a plurality of projections are formed due to thermal deformation. Subsequently, the support and the cushion sheet sandwiched between the molds are subjected to cold pressing by placing them between internally water-cooled platens without heaters and applying a pressure of, for example, 30 tones by pressing the platens for about 3 minutes. This enables an embossed molded printed material to be obtained in which the support has a projecting shape due to thermal deformation by the hot pressing. The pressure applied and the heating temperature may be adjusted appropriately according to the material of the printed material and conditions such as the shape that is to be formed, etc.

When the printed material formed using the ink composition of the present invention is embossed, it is preferable to carry out embossing at 20°C to 150°C, more preferably 20°C to 100°C, and particularly preferably 25°C to 60°C. In the above-mentioned range, it is possible to carry out processing in which there is little change in the color of the image and release properties from a mold is excellent.

Examples

The present invention is explained in further detail by reference to Examples and Comparative Examples. However, the present invention should not be construed as being limited to these Examples. 'Parts' and '%' are on a mass basis unless otherwise specified.

(Preparation of pigment dispersion)

The components described in Table 1 below other than the pigment were mixed and stirred using a SILVERSON mixer (10 to 15 minutes, 2,000 to 3,000 rpm) to thus give a uniform transparent liquid (dispersant dilution liquid). The pigment described in Table 1 below was added to this transparent liquid (dispersant dilution liquid), and the mixture was further stirred using the mixer (10 to 20 minutes, 2,000 to 3,000 rpm) to give 500 parts of a uniform preliminary dispersion. Subsequently, a dispersion treatment was carried out using a circulating bead mill (SL-012C1) manufactured by Dispermat. Dispersion conditions were such that 200 parts of zirconia beads having a diameter of 0.65 mm were charged and the peripheral speed was 15 m/s. The dispersion time was 1 to 6 hours.

(Table 1)

| | C dispersion | M dispersion | Y dispersion | K dispersion | W dispersion |
|---|---|---|---|---|---|
| Cyan pigment | 30 | - | - | - | - |
| Magenta pigment | - | 30 | - | - | - |

(continued)

| | C dispersion | M dispersion | Y dispersion | K dispersion | W dispersion |
|---|---|---|---|---|---|
| Yellow pigment | - | - | 30 | - | - |
| Black pigment | - | - | - | 40 | - |
| White pigment | - | - | - | - | 50 |
| Dispersant A | 10 | 10 | 10 | 10 | - |
| Dispersant B | - | - | - | - | 10 |
| Inhibitor | 1 | 1 | 1 | 1 | 1 |
| Monomer | 59 | 59 | 59 | 49 | 39 |

The starting materials described in Table 1 are explained in detail below. Furthermore, the numerical values in Table 1 denote parts by mass. Cyan pigment (C. I. Pigment Blue 15: 4, HELIOGEN BLUE D 7110 F, BASF) Magenta pigment (mixed crystal quinacridone pigment, CINQUASIA MAGENTA L 4540, BASF)
Yellow pigment (C. I. Pigment Yellow 155, INK JET YELLOW 4GC, Clarinat)
Black pigment (carbon black, MOGUL E, CABOT)
White pigment ($TiO_2$, KRONOS 2300, KRONOS)
Dispersant A (SOLSPERSE 32000, Lubrizol)
Dispersant B (SOLSPERSE 41000, Lubrizol)
Inhibitor (nitroso-based polymerization inhibitor, tris(N-nitroso-N-phenylhydroxylamine) aluminum salt, FLORSTAB UV12, Kromachem)
Monomer (2-phenoxyethyl acrylate, SR339C, Sartomer)

<Synthetic Examples of Polymers 1 to 24>

20 g of a mixed liquid, which was a combination of *n*-butyl methacrylate and isobornyl acrylate as Polymer 1 described in Table 2 to Table 4, and 30 g of methyl ethyl ketone were introduced into a nitrogen-flushed 3-necked flask, stirred using a stirrer (Three-One motor, Shinto Scientific Co., Ltd.), and heated to 65°C under a flow of nitrogen in the flask.
1st stage: 80 mg of 2,2-azobis(2,4-dimethylvaleronitrile) (V-65, Wako Pure Chemical Industries, Ltd.) was added to the mixed liquid and heating was carried out at 65°C for 30 minutes while stirring.
2nd stage: 80 mg of V-65 was added and heating was carried out at 65°C for a further 1 hour while stirring.
The reaction solution thus obtained was poured into 1,000 mL of hexane while stirring, and a precipitate thus produced was dried by heating, thus giving Polymer 1. The weight-average molecular weight (polystyrene basis) of the polymer was measured using GPC and it was found to be in the range of 30,000 to 35,000.
Polymers 2 to 24 were produced as polymers having a molecular weight of 30,000 to 35,000 by the same procedure as that for Polymer 1 by appropriately changing the amount of V-65 added and the heating time, in accordance with the compositions in Table 2 to Table 4. Usually, when the amount of V-65 added is large, the weight-average molecular weight of the polymer obtained becomes small, and when the amount is small, the weight-average molecular weight of the polymer obtained becomes large. Furthermore, when the heating time is long, the weight-average molecular weight of the polymer obtained becomes large, and when it is short, the weight-average molecular weight of the polymer becomes small.

(Table 2)

| | | Polymer | | | | | | | |
|---|---|---|---|---|---|---|---|---|---|
| | | 1 | 2 | 3 | 4 | 5 | 6 | 7 | 8 |
| Component 1 | *n*-Butyl methacrylate | 10 | 10 | 10 | 10 | 10 | 10 | 10 | 10 |

(continued)

| | | Polymer | | | | | | | |
|---|---|---|---|---|---|---|---|---|---|
| | | 1 | 2 | 3 | 4 | 5 | 6 | 7 | 8 |
| Component 2 | Isobornyl methacrylate | 10 | - | - | - | - | - | - | - |
| | *t*-Butyl methacrylate | - | 10 | - | - | - | - | - | - |
| | Methyl methacrylate | - | - | 10 | - | - | - | - | - |
| | Cyclohexyl methacrylate | - | - | - | 10 | - | - | - | - |
| | 2-Phenoxyethyl methacrylate | - | - | - | - | 10 | - | - | - |
| | 2-Ethylhexyl methacrylate | - | - | - | - | - | 10 | - | - |
| | Isodecyl methacrylate | - | - | - | - | - | - | 10 | - |
| | *n*-lauryl methacrylate | - | - | - | - | - | - | - | 10 |
| Tg(°C) | | 75 | 65 | 70 | 35 | 15 | 5 | -10 | -20 |

(Table 3)

| | | Polymer | | | | | | |
|---|---|---|---|---|---|---|---|---|
| | | 9 | 10 | 11 | 12 | 13 | 14 | 15 |
| Component 1 | Methyl methacrylate | 10 | 10 | 10 | 10 | 10 | 10 | 10 |
| Component 2 | Isobornyl methacrylate | 10 | - | - | - | - | - | - |
| | *t*-Butyl methacrylate | - | 10 | - | - | - | - | - |
| | Cyclohexyl methacrylate | - | - | 10 | - | - | - | - |
| | 2-Phenoxyethyl methacrylate | - | - | - | 10 | - | - | - |
| | 2-Ethylhexyl methacrylate | - | - | - | - | 10 | - | - |
| | Isodecyl methacrylate | - | - | - | - | - | 10 | - |
| | *n*-lauryl methacrylate | - | - | - | - | - | - | 10 |
| Tg (°C) | | 130 | 110 | 90 | 70 | 50 | 40 | 35 |

(Table 4)

| | | Polymer | | | | | | | | |
|---|---|---|---|---|---|---|---|---|---|---|
| | | 16 | 17 | 18 | 19 | 20 | 21 | 22 | 23 | 24 |
| Component | Isobornyl methacrylate | 20 | - | - | - | - | - | - | - | - |
| | *t*-Butyl methacrylate | 20 | 20 | - | - | - | - | - | - | - |
| | Cyclohexyl methacrylate | - | - | 20 | - | - | - | - | - | - |
| | 2-Phenoxyethyl methacrylate | - | - | - | 20 | - | - | - | - | - |
| | 2-Ethylhexyl methacrylate | - | - | - | - | 20 | - | - | - | - |
| | Isodecyl methacrylate | - | - | - | - | - | 20 | - | - | - |
| | *n*-Lauryl methacrylate | - | - | - | - | - | - | 20 | - | - |
| | *n*-Butyl methacrylate | - | - | - | - | - | - | - | 20 | - |
| | Methyl methacrylate | - | - | - | - | - | - | - | - | 20 |
| Tg(°C) | | 180 | 107 | 65 | 20 | -10 | -40 | -65 | 20 | 105 |

<Synthetic Examples of Polymers 25 and 26>

Polymer 25, which had a molecular weight of 5,000, and Polymer 26, which had a molecular weight of 10,000, were produced by the same procedure as that for Polymer 1 by using 20 g of a mixed liquid of *n*-butyl methacrylate and methyl methacrylate and appropriately changing the amount of V-65 added and the heating time. The Tg was about 70°C for both polymers.
The units for the numerical values for each of the components described in Table 2 to Table 4 above are g.
Details of starting materials used in the polymer synthesis are as follows.
Isobornyl methacrylate (Light-Ester IB-X, Kyoeisha Chemical Co., Ltd.)
*t*-Butyl methacrylate (Light-Ester TB, Kyoeisha Chemical Co., Ltd.)
Cyclohexyl methacrylate (Light-Ester CH, Kyoeisha Chemical Co., Ltd.)
2-Phenoxyethyl methacrylate (SR340, Sartomer)
2-Ethylhexyl methacrylate (Light-Ester EH, Kyoeisha Chemical Co., Ltd.)
Isodecyl methacrylate (Light-Ester ID, Kyoeisha Chemical Co., Ltd.)
*n*-Lauryl methacrylate (Light-Ester L, Kyoeisha Chemical Co., Ltd.)
*n*-Butyl methacrylate (Light-Ester NB, Kyoeisha Chemical Co., Ltd.)
Methyl methacrylate (M0087, Tokyo Chemical Industry Co., Ltd.)

<Measurement conditions for polymer molecular weight>

The weight-average molecular weight of each polymer was measured using an HLC-8220GPC high performance liquid chromatograph (HPLC)

(Tosoh Corporation).

1) Instrument: HLC-8220GPC, Tosoh Corporation
2) Column: three joined columns of TSK gel SuperAWM-H (6.0 mm I.D. × 15 cm × 3) Tosoh Corporation, microparticle gel using hydrophilic vinyl polymer as substrate
3) Solvent: *N*-methylpyrrolidone (10 mM LiBr)
4) Flow rate: 0.5 mL/min
5) Sample concentration: 0.1 mass%
6) Amount injected: 60μL
7) Temperature: 40°C
8) Detector: refractive index detector (RI)

<Measurement conditions for Tg of polymer>

The glass transition temperature (Tg) of each polymer was measured using an EXSTAR6220 differential scanning calorimeter (DSC) (SII Nanotechnology Inc.).

<Polyether-modified silicone compounds used>

The polyether-modified silicone compounds used are shown in Table 5 below.

(Table 5)

| Product name | Number of acrylate groups | Manufacturer |
|---|---|---|
| BYK307 | 0 | BYK |
| TEGORAD2200 | 2 | Evonik |
| TEGORAD2010 | 5 | Evonik |
| TEGORAD2600 | 8 | Evonik |

<Preparation of Ink Sets 1 to 8 (monomer composition)>

The components described in Table 6 to Table 13 other than the polymerization initiator and the pigment dispersion were stirred by a SILVERSON mixer (60 minutes, 3,000 to 5,000 rpm) to give a uniform transparent liquid. The polymerization initiator and the pigment dispersion were added to this transparent liquid and stirred (10 to 20 minutes, 2,000 to 3,000 rpm) to give ink compositions of each color.

<Method for evaluation of ink composition>

A commercial inkjet printer (Acuity 350, Fujifilm Corporation) was charged with the ink composition produced above, and a printed sample (100%) was produced using this. The substrate was polycarbonate (thickness: 0.75 mm, Lexan Polycarbonate, Robert Horne).

Here, 100% means conditions for the maximum amount of ink to be obtained when printing was carried out under standard printing conditions for the printer.

<Test item 1 (curability)>

Curability was evaluated based on the presence or absence of tackiness on a printed material when printing was carried out using the above printer at three FinerArt Lamp setting changes of from 7 to 5. The evaluation criteria were as follows, and the results are shown in each of the tables. When the curability was poor, the ink composition was not subjected to subsequent tests.

Excellent: no tackiness at a FinerArt Lamp setting of 5
Good: no tackiness at a FinerArt Lamp setting of 6 or 7 but there was tackiness at a FinerArt Lamp setting of 5
Fair: no tackiness at a FinerArt Lamp setting of 7 but there was tackiness at a FinerArt Lamp setting of 6
Poor: there was tackiness at a FinerArt Lamp setting of 7

<Test item 2 (continuous printing test)>

Five sheets of A0 size solid image were continuously printed, and the number of missing nozzles was counted. The evaluation criteria were as follows, and the results are shown in each of the tables. When the continuous printing test was poor, the ink was not subjected to subsequent tests.

Excellent: no missing nozzles when 5 sheets were printed
Good: one missing nozzle when 5 sheets were printed
Fair: two missing nozzles when 5 sheets were printed
Poor: three or more missing nozzles when 5 sheets were printed

<Test item 3 (blocking resistance (PC, coated paper)) >

A printed material was produced by the printer at a Lamp setting of 7, polycarbonate (PC, thickness: 0.75 mm, Lexan Polycarbonate, Robert Horne) or coated paper was superimposed on the printed face, a weight of 4 kg per A4 size was placed thereon, and the assembly was allowed to stand at room temperature (25°C) for 24 hours. 24 hours later, the superimposed substrate was peeled off from the printed face, and blocking resistance was evaluated using the criteria below.

Excellent: when the superimposed substrate was peeled off from the printed face, there was no sound and no transfer
Good: when the superimposed substrate was peeled off from the printed face, there was sound but no transfer
Fair: slight transfer of transparency
Poor: transfer of color

<Test item 4 (adhesion (PC)) >

After a printed material was produced by the printer at a Lamp setting of 7 and allowed to stand for 24 hours at room temperature (25°C), a crosscut test was carried out and adhesion was evaluated. When the adhesion was poor, the ink was not subjected to subsequent tests.

Excellent: score of 0 based on JIS K5600-5-6 (ISO2409)

Good: score of 1 based on JIS K5600-5-6 (ISO2409)
Fair: score of 2 based on JIS K5600-5-6 (ISO2409)
Poor: score of 3 or more based on JIS K5600-5-6 (ISO2409)

<Test item 5 (vacuum forming suitability (PC)) >

After a printed material was produced by the printer at a Lamp setting of 7 and allowed to stand at room temperature (25°C) for 24 hours, a molded printed material was produced using a vacuum forming machine (Model 725FLB Vacuum Former) manufactured by C. R. Clarke.

A heater was set so that the substrate temperature reached 180°C within 30 seconds, and the heating time was 60 seconds. Three types of molds (mold 1: rectangular parallelepiped with area 10 cm × 10 cm and height 2 cm, mold 2: rectangular parallelepiped with area 10 cm × 10 cm and height 5 cm, mold 3: rectangular parallelepiped with area 10 cm × 10 cm and height 10 cm) were used. After vacuum forming, evaluation was carried out using the criteria below. When the vacuum forming suitability was poor, the ink was not subjected to subsequent tests.

Excellent: no film cracking in mold 1, 2, or 3 and no whitening
Good: no film cracking in mold 1, 2, or 3
Fair: no film cracking in mold 1 or 2
Poor: film cracking in molds 1 and 2

<Test item 6 (trimming suitability) >

A sample that had been produced for the vacuum forming suitability test was subjected to trimming. A portion spaced by 0.5 cm from the rise of the rectangular parallelepiped was sectioned using a guillotine cutter, and the cross section was evaluated using the following criteria.

Excellent: no peeling of film in the cross section of molds 1, 2, or 3

Good: no peeling of film in the cross section of molds 1 or 2 but peeling occurred in the cross section of mold 3

Fair: no peeling of film in the cross section of mold 1 but peeling occurred in the cross section of molds 2 and 3

Poor: peeling occurred in the cross section of mold 1

(Table 6)

| Ink Set 1 (Example) | Cyan | Magenta | Yellow | Black | White |
|---|---|---|---|---|---|
| PEA | 44.80 | 39.60 | 45.50 | 46.60 | 23.10 |
| IBOA | 12.00 | 12.00 | 12.00 | 12.00 | 12.00 |
| NVC | 24.00 | 24.00 | 24.00 | 24.00 | 24.00 |
| OH-TEMP | 0.30 | 0.30 | 0.30 | 0.30 | 0.30 |
| ITX | 1.00 | 1.00 | 1.00 | 1.00 | 1.00 |
| TPO | 2.80 | 2.80 | 2.80 | 2.80 | 2.80 |
| Irg819 | 2.80 | 2.80 | 2.80 | 2.80 | 2.80 |
| C dispersion | 8.30 | - | - | - | - |
| M dispersion | - | 13.50 | - | - | - |
| Y dispersion | - | - | 7.60 | - | - |
| K dispersion | - | - | - | 6.50 | - |
| W dispersion | - | - | - | - | 30.00 |
| Polymer 3 | 2.00 | 2.00 | 2.00 | 2.00 | 2.00 |
| TEGORAD2010 | 2.00 | 2.00 | 2.00 | 2.00 | 2.00 |

(continued)

| Ink Set 1 (Example) | Cyan | Magenta | Yellow | Black | White |
|---|---|---|---|---|---|
| Components A to C/total monomer content | 1 | 1 | 1 | 1 | 1 |
| Component C/Component A + Component B | 0.1628 | 0.1677 | 0.1622 | 0.1626 | 0.2041 |
| Curability | Excellent | | | | |
| Blocking resistance (PC) | Good | | | | |
| Blocking resistance (coated paper) | Fair | | | | |
| Adhesion (PC) | Excellent | | | | |
| Vacuum forming suitability (PC) | Good | | | | |
| Vacuum forming suitability (mold 1, PC) | No cracking of film, no whitening | | | | |
| Vacuum forming suitability (mold 2, PC) | No cracking of film, whitening occurred in single color area | | | | |
| Vacuum forming suitability (mold 3, PC) | No cracking of film, whitening occurred in single color area | | | | |
| Trimming suitability (PC) | Good | | | | |
| Continuous printing test | Fair | | | | |

(Table 7)

| Ink Set 2 (Example) | Cyan | Magenta | Yellow | Black | White |
|---|---|---|---|---|---|
| PEA | 26.80 | 21.60 | 27.50 | 28.60 | 5.10 |
| IBOA | 30.00 | 30.00 | 30.00 | 30.00 | 30.00 |
| NVC | 24.00 | 24.00 | 24.00 | 24.00 | 24.00 |
| OH-TEMP | 0.30 | 0.30 | 0.30 | 0.30 | 0.30 |
| ITX | 1.00 | 1.00 | 1.00 | 1.00 | 1.00 |
| TPO | 2.80 | 2.80 | 2.80 | 2.80 | 2.80 |
| Irg81 9 | 2.80 | 2.80 | 2.80 | 2.80 | 2.80 |
| C dispersion | 8.30 | - | - | - | - |
| M dispersion | - | 13.50 | - | - | - |
| Y dispersion | - | - | 7.60 | - | - |
| K dispersion | - | - | - | 6.50 | - |
| W dispersion | - | - | - | - | 30.00 |
| Polymer 3 | 2.00 | 2.00 | 2.00 | 2.00 | 2.00 |
| TEGORAD2010 | 2.00 | 2.00 | 2.00 | 2.00 | 2.00 |
| Components A to C/total monomer contents | 1 | 1 | 1 | 1 | 1 |
| Component C/Component A + Component B | 0.5386 | 0.5601 | 0.5359 | 0.5378 | 0.7353 |
| Curability | Excellent | | | | |
| Blocking resistance (PC) | Excellent | | | | |
| Blocking resistance (coated paper) | Good | | | | |
| Adhesion (PC) | Excellent | | | | |
| Vacuum forming suitability (PC) | Good | | | | |
| Vacuum forming suitability (mold 1, PC) | No cracking of film, no whitening | | | | |

(continued)

| Ink Set 2 (Example) | Cyan | Magenta | Yellow | Black | White |
|---|---|---|---|---|---|
| Vacuum forming suitability (mold 2, PC) | No cracking of film, whitening occurred in single color area | | | | |
| Vacuum forming suitability (mold 3, PC) | No cracking of film, whitening occurred in single color area | | | | |
| Trimming suitability (PC) | Fair | | | | |
| Continuous printing test | Fair | | | | |

(Table 8)

| Ink Set 3 (Example) | Cyan | Magenta | Yellow | Black | White |
|---|---|---|---|---|---|
| PEA | 41.80 | 36.60 | 42.50 | 43.60 | 20.10 |
| TMCHA | 15.00 | 15.00 | 15.00 | 15.00 | 15.00 |
| NVC | 24.00 | 24.00 | 24.00 | 24.00 | 24.00 |
| OH-TEMP | 0.30 | 0.30 | 0.30 | 0.30 | 0.30 |
| ITX | 1.00 | 1.00 | 1.00 | 1.00 | 1.00 |
| TPO | 2.80 | 2.80 | 2.80 | 2.80 | 2.80 |
| Irg819 | 2.80 | 2.80 | 2.80 | 2.80 | 2.80 |
| C dispersion | 8.30 | - | - | - | - |
| M dispersion | - | 13.50 | - | - | - |
| Y dispersion | - | - | 7.60 | - | - |
| K dispersion | - | - | - | 6.50 | - |
| W dispersion | - | - | - | - | 30.00 |
| Polymer 3 | 2.00 | 2.00 | 2.00 | 2.00 | 2.00 |
| TEGORAD2010 | 2.00 | 2.00 | 2.00 | 2.00 | 2.00 |
| Components A to C/total monomer content | 1 | 1 | 1 | 1 | 1 |
| Component C/Component A + Component B | 0.2122 | 0.2188 | 0.2113 | 0.2119 | 0.2688 |
| Curability | Excellent | | | | |
| Blocking resistance (PC) | Excellent | | | | |
| Blocking resistance (coated paper) | Good | | | | |
| Adhesion (PC) | Excellent | | | | |
| Vacuum forming suitability (PC) | Good | | | | |
| Vacuum forming suitability (mold 1, PC) | No cracking of film, no whitening | | | | |
| Vacuum forming suitability (mold 2, PC) | No cracking of film, whitening occurred in single color area | | | | |
| Vacuum forming suitability (mold 3, PC) | No cracking of film, whitening occurred in single color area | | | | |
| Trimming suitability (PC) | Good | | | | |
| Continuous printing test | Fair | | | | |

(Table 9)

| Ink Set 4 (Example) | Cyan | Magenta | Yellow | Black | White |
|---|---|---|---|---|---|
| PEA | 41.80 | 36.60 | 42.50 | 43.60 | 20.10 |

(continued)

| Ink Set 4 (Example) | Cyan | Magenta | Yellow | Black | White |
|---|---|---|---|---|---|
| TBCHA | 15.00 | 15.00 | 15.00 | 15.00 | 15.00 |
| NVC | 24.00 | 24.00 | 24.00 | 24.00 | 24.00 |
| OH-TEMP | 0.30 | 0.30 | 0.30 | 0.30 | 0.30 |
| ITX | 1.00 | 1.00 | 1.00 | 1.00 | 1.00 |
| TPO | 2.80 | 2.80 | 2.80 | 2.80 | 2.80 |
| Irg819 | 2.80 | 2.80 | 2.80 | 2.80 | 2.80 |
| C dispersion | 8.30 | - | - | - | - |
| M dispersion | - | 13.50 | - | - | - |
| Y dispersion | - | - | 7.60 | - | - |
| K dispersion | - | - | - | 6.50 | - |
| W dispersion | - | - | - | - | 30.00 |
| Polymer 3 | 2.00 | 2.00 | 2.00 | 2.00 | 2.00 |
| TEGORAD2010 | 2.00 | 2.00 | 2.00 | 2.00 | 2.00 |
| Components A to C/total monomer content | 1 | 1 | 1 | 1 | 1 |
| Component C/Component A + Component B | 0.2122 | 0.2188 | 0.2113 | 0.2119 | 0.2688 |
| Curability | Excellent | | | | |
| Blocking resistance (PC) | Excellent | | | | |
| Blocking resistance (coated paper) | Good | | | | |
| Adhesion (PC) | Excellent | | | | |
| Vacuum forming suitability (PC) | Good | | | | |
| Vacuum forming suitability (mold 1, PC) | No cracking of film, no whitening | | | | |
| Vacuum forming suitability (mold 2, PC) | No cracking of film, whitening occurred in single color area | | | | |
| Vacuum forming suitability (mold 3, PC) | No cracking of film, whitening occurred in single color area | | | | |
| Trimming suitability (PC) | Good | | | | |
| Continuous printing test | Fair | | | | |

(Table 10)

| Ink Set 5 (Example) | Cyan | Magenta | Yellow | Black | White |
|---|---|---|---|---|---|
| PEA | 31.80 | 26.60 | 32.50 | 33.60 | 10.10 |
| 4PEA | 10.00 | 10.00 | 10.00 | 10.00 | 10.00 |
| TBCHA | 15.00 | 15.00 | 15.00 | 15.00 | 15.00 |
| NVC | 24.00 | 24.00 | 24.00 | 24.00 | 24.00 |
| OH-TEMP | 0.30 | 0.30 | 0.30 | 0.30 | 0.30 |
| ITX | 1.00 | 1.00 | 1.00 | 1.00 | 1.00 |
| TPO | 2.80 | 2.80 | 2.80 | 2.80 | 2.80 |
| Irg819 | 2.80 | 2.80 | 2.80 | 2.80 | 2.80 |
| C dispersion | 8.30 | - | - | - | - |

(continued)

| Ink Set 5 (Example) | Cyan | Magenta | Yellow | Black | White |
|---|---|---|---|---|---|
| M dispersion | - | 13.50 | - | - | - |
| Y dispersion | - | - | 7.60 | - | - |
| K dispersion | - | - | - | 6.50 | - |
| W dispersion | - | - | - | - | 30.00 |
| Polymer 3 | 2.00 | 2.00 | 2.00 | 2.00 | 2.00 |
| TEGORAD2010 | 2.00 | 2.00 | 2.00 | 2.00 | 2.00 |
| Components A to C/total monomer content | 1 | 1 | 1 | 1 | 1 |
| Components C/Component A + Component B | 0.2122 | 0.2188 | 0.2113 | 0.2119 | 0.688 |
| Curability | Excellent | | | | |
| Blocking resistance (PC) | Good | | | | |
| Blocking resistance (coated paper) | Fair | | | | |
| Adhesion (PC) | Excellent | | | | |
| Vacuum forming suitability (PC) | Good | | | | |
| Vacuum forming suitability (mold 1, PC) | No cracking of film, no whitening | | | | |
| Vacuum forming suitability (mold 2, PC) | No cracking of film, whitening occurred in single color area | | | | |
| Vacuum forming suitability (mold 3, PC) | No cracking of film, whitening occurred in single color area | | | | |
| Trimming suitability (PC) | Good | | | | |
| Continuous printing test | Fair | | | | |

(Table 11)

| Ink Set 6 (Example) | Cyan | Magenta | Yellow | Black | White I |
|---|---|---|---|---|---|
| PEA | 39.80 | 34.60 | 40.50 | 41.60 | 18.10 |
| IBOA | 12.00 | 12.00 | 12.00 | 12.00 | 12.00 |
| NVC | 24.00 | 24.00 | 24.00 | 24.00 | 24.00 |
| ODA | 5.00 | 5.00 | 5.00 | 5.00 | 5.00 |
| OH-TEMP | 0.30 | 0.30 | 0.30 | 0.30 | 0.30 |
| ITX | 1.00 | 1.00 | 1.00 | 1.00 | 1.00 |
| TPO | 2.80 | 2.80 | 2.80 | 2.80 | 2.80 |
| Irg819 | 2.80 | 2.80 | 2.80 | 2.80 | 2.80 |
| C dispersion | 8.30 | - | - | - | - |
| M dispersion | - | 13.50 | - | - | - |
| Y dispersion | - | - | 7.60 | - | - |
| K dispersion | - | - | - | 6.50 | - |
| W dispersion | - | - | - | - | 30.00 |
| Polymer 3 | 2.00 | 2.00 | 2.00 | 2.00 | 2.00 |
| TEGORAD2010 | 2.00 | 2.00 | 2.00 | 2.00 | 2.00 |
| Components A to C/total monomer content | 0.9417 | 0.9402 | 0.9418 | 0.9417 | 0.9294 |

(continued)

| Ink Set 6 (Example) | Cyan | Magenta | Yellow | Black | White I |
|---|---|---|---|---|---|
| Component C/Component A + Component B | 0.1747 | 0.1803 | 0.1740 | 0.1745 | 0.2230 |
| Curability | Good | | | | |
| Blocking resistance (PC) | Fair | | | | |
| Blocking resistance (coated paper) | Fair | | | | |
| Adhesion (PC) | Excellent | | | | |
| Vacuum forming suitability (PC) | Good | | | | |
| Vacuum forming suitability (mold 1, PC) | No cracking of film, no whitening | | | | |
| Vacuum forming suitability (mold 2, PC) | No cracking of film, whitening occurred in single color area | | | | |
| Vacuum forming suitability (mold 3, PC) | No cracking of film, whitening occurred in single color area | | | | |
| Trimming suitability (PC) | Excellent | | | | |
| Continuous printing test | Fair | | | | |

(Table 12)

| Ink Set 7 (Comparative Example) | Cyan | Magenta | Yellow | Black White | |
|---|---|---|---|---|---|
| PEA | 34.80 | 29.60 | 35.50 | 36.60 | 13.10 |
| IBOA | 12.00 | 12.00 | 12.00 | 12.00 | 12.00 |
| NVC | 24.00 | 24.00 | 24.00 | 24.00 | 24.00 |
| ODA | 10.00 | 10.00 | 10.00 | 10.00 | 10.00 |
| OH-TEMP | 0.30 | 0.30 | 0.30 | 0.30 | 0.30 |
| ITX | 1.00 | 1.00 | 1.00 | 1.00 | 1.00 |
| TPO | 2.80 | 2.80 | 2.80 | 2.80 | 2.80 |
| Irg819 | 2.80 | 2.80 | 2.80 | 2.80 | 2.80 |
| C dispersion | 8.30 | | - | - | - |
| M dispersion | - | 13.50 | - | - | - |
| Y dispersion | - | - | 7.60 | - | - |
| K dispersion | - | - | - | 6.50 | - |
| W dispersion | | - | - | - | 30.00 |
| Polymer 3 | 2.00 | 2.00 | 2.00 | 2.00 | 2.00 |
| TEGORAD2010 | 2.00 | 2.00 | 2.00 | 2.00 | 2.00 |
| Components A to C/total monomer content | 0.8833 | 0.8803 | 0.8837 | 0.8834 | 0.8588 |
| Component C/Component A + Component B | 0.1884 | 0.1949 | 0.1875 | 0.1881 | 0.2459 |
| Curability | Poor | | | | |
| Blocking resistance (PC) | Poor | | | | |
| Blocking resistance (coated paper) | Poor | | | | |

(continued)

| Ink Set 7 (Comparative Example) | Cyan | Magenta | Yellow | Black White |
|---|---|---|---|---|
| Adhesion (PC) | Test not carried out due to poor curing | | | |
| Vacuum forming suitability (PC) | | | | |
| Vacuum forming suitability (mold 1, PC) | | | | |
| Vacuum forming suitability (mold 2, PC) | | | | |
| Vacuum forming suitability (mold 3, PC) | | | | |
| Trimming suitability (PC) | | | | |
| Continuous printing test | | | | |

(Table 13)

| Ink Set 8 (Comparative Example) | Cyan | Magenta | Yellow | Black | White |
|---|---|---|---|---|---|
| PEA | 34.80 | 29.60 | 35.50 | 36.60 | 13.10 |
| IBOA | 12.00 | 12.00 | 12.00 | 12.00 | 12.00 |
| NVC | 24.00 | 24.00 | 24.00 | 24.00 | 24.00 |
| HDDA | 10.00 | 10.00 | 10.00 | 10.00 | 10.00 |
| OH-TEMP | 0.30 | 0.30 | 0.30 | 0.30 | 0.30 |
| ITX | 1.00 | 1.00 | 1.00 | 1.00 | 1.00 |
| TPO | 2.80 | 2.80 | 2.80 | 2.80 | 2.80 |
| Irg819 | 2.80 | 2.80 | 2.80 | 2.80 | 2.80 |
| C dispersion | 8.30 | - | - | - | - |
| M dispersion | - | 13.50 | - | - | - |
| Y dispersion | - | - | 7.60 | - | - |
| K dispersion | - | - | - | 6.50 | - |
| W dispersion | - | - | - | - | 30.00 |
| Polymer 3 | 2.00 | 2.00 | 2.00 | 2.00 | 2.00 |
| TEGORAD2010 | 2.00 | 2.00 | 2.00 | 2.00 | 2.00 |
| Components A to C/total monomer content | 0.8833 | 0.8803 | 0.8837 | 0.8834 | 0.8588 |
| Component C/Component A + Component B | 0.1884 | 0.1949 | 0.1875 | 0.1881 | 0.2459 |
| Curability | Excellent | | | | |
| Blocking resistance (PC) | Excellent | | | | |
| Blocking resistance (coated paper) | Excellent | | | | |
| Adhesion (PC) | Fair | | | | |
| Vacuum forming suitability (PC) | Poor | | | | |
| Vacuum forming suitability (mold 1, PC) | Cracking of film occurred | | | | |
| Vacuum forming suitability (mold 2, PC) | Cracking of film occurred | | | | |
| Vacuum forming suitability (mold 3, PC) | Cracking of film occurred | | | | |
| Trimming suitability (PC) | Test not carried out due to lack of vacuum forming suitability | | | | |
| Continuous printing test | Fair | | | | |

'Components A to C/total monomer content' in Table 6 to Table 13 denotes 'the total content of Component A to Component C/total content of polymerizable compounds' as a ratio by weight, and 'Component C/Component A + Component B' denotes 'content of Component C/(content of Component A + content of Component B)' as a ratio by weight. Furthermore, the units for the numerical values in the rows of each of the components described in Table 6 to Table 13 are parts by mass.

Details of starting materials used in Table 6 to Table 13 other than the above are as follows.
PEA (2-phenoxyethyl acrylate, SR339C, Sartomer)
4PEA (compound below, SR410, Sartomer)
IBOA (isobornyl acrylate, SR506D, Sartomer)
TMCHA (3,3,5-trimethylcyclohexyl acrylate, SR420, Sartomer)
TBCHA (*t*-butylcyclohexyl acrylate, SR217, Sartomer)
NVC (*N*-vinylcaprolactam, BASF)
ODA (mixture of octyl acrylate and decyl acrylate, SR484, Sartomer)
HDDA (1,6-hexanediol diacrylate, SR238, Sartomer)
OH-TEMP (4-hydroxy-2,2,6,6-tetramethylpiperidine 1-oxyl, 4-HYDROXY TEMPO, Evonik)
ITX (isopropylthioxanthone, SPEEDCURE ITX, Lambson)
TPO (2,4,6-trimethylbenzoyldiphenylphosphine oxide, LUCIRIN TPO, BASF) Irg819 (bis(2,4,6-trimethylbenzoyl)phenylphosphine oxide, IRGACURE 819, BASF)

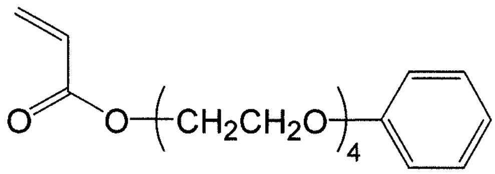

4PEA

<Preparation of Ink Sets 9 to 16 (composition of silicone compound)>

The components described in Table 14 below other than the polymerization initiator and the pigment dispersion were mixed and stirred using a SILVERSON mixer (60 minutes, 3,000 to 5,000 rpm) to thus give a uniform transparent liquid. The polymerization initiator and the pigment dispersion were added to this transparent liquid, and the mixture was stirred (10 to 20 minutes, 2,000 to 3,000 rpm) to give Ink Mother Liquor Set 1.

(Table 14)

| Ink Mother Liquor Set 1 | Cyan | Magenta | Yellow | Black | White |
|---|---|---|---|---|---|
| PEA | 42.80 | 37.60 | 43.50 | 44.60 | 21 to |
| IBOA | 12.00 | 12.00 | 12.00 | 12.00 | 12.00 |
| NVC | 24.00 | 24.00 | 24.00 | 24.00 | 24.00 |
| OH-TEMP | 0.30 | 0.30 | 0.30 | 0.30 | 0.30 |
| ITX | 1.00 | 1.00 | 1.00 | 1.00 | - |
| TPO | 2.80 | 2.80 | 2.80 | 2.80 | 2.80 |
| Irg819 | 2.80 | 2.80 | 2.80 | 2.80 | 3.80 |
| C dispersion | 8.30 | - | - | - | - |
| M dispersion | - | 13.50 | - | - | - |
| Y dispersion | - | - | 7.60 | - | - |
| K dispersion | - | - | - | 6.50 | - |
| W dispersion | - | - | - | - | 30.00 |
| Polymer 3 | 2.00 | 2.00 | 2.00 | 2.00 | 2.00 |

The units for the numerical values in the rows of each of the components described in Table 14 are parts by mass.

A silicone compound and PEA (for adjustment of pigment concentration) were added to each ink composition of Ink Mother Liquor Set 1 produced above, in accordance with Table 15 or Table 16. Stirring was carried out using a SILVERSON mixer (10 minutes, 3,000 to 5,000 rpm), thus giving ink sets 9 to 16. For example, when producing Ink Set 13, after adding 2.0 parts by mass of TEGORAD, 2.0 parts by mass of PEA was added so that the pigment concentrations of all the ink sets was equal to that of Ink Set 1.

Evaluation was carried out by the same procedure for Ink Set 1, and the results are shown in Table 15 or Table 16 below.

(Table 15)

| | Ink Set 9 (Comparative Example) | Ink Set 10 (Comparative Example) | Ink Set 11 (Example) | Ink Set 12 (Example) |
|---|---|---|---|---|
| Silicone compound type | None | BYK307 | TEGORAD2200 | TEGORAD2010 |
| Number of acrylate groups | - | 0 | 2 | 5 |
| Amount of silicone compound added | 0 parts by mass | 2.0 parts by mass | 2.0 parts by mass | 0.5 parts by mass |
| Curability | Fair | Excellent | Excellent | Excellent |
| Blocking resistance (PC) | Poor | Fair | Fair | Fair |
| Blocking resistance (coated paper) | Poor | Poor | Fair | Fair |

(continued)

| | Ink Set 9 (Comparative Example) | Ink Set 10 (Comparative Example) | Ink Set 11 (Example) | Ink Set 12 (Example) |
|---|---|---|---|---|
| Adhesion (PC) | Test not carried out due to poor blocking | Fair | Excellent | Excellent |
| Vacuum forming suitability (PC) | | Poor | Good | Good |
| Vacuum forming suitability (mold 1, PC) | | Cracking of film occurred | No cracking of film, no whitening | No cracking of film, no whitening |
| Vacuum forming suitability (mold 2, PC) | | Cracking of film occurred | No cracking of film, whitening occurred in single color area | No cracking of film, whitening occurred in single color area |
| Vacuum forming suitability (mold 3, PC) | | Cracking of film occurred | No cracking of film, whitening occurred in single color area | No cracking of film, whitening occurred in single color area |
| Trimming suitability (PC) | | Test not carried out due to lack of vacuum forming suitability | Good | Good |
| Continuous printing test | | | Fair | Fair |

(Table 16)

| | Ink Set 13 (Example) | Ink Set 14 (Example) | Ink Set 15 (Example) | Ink Set 16 (Example) |
|---|---|---|---|---|
| Silicone compound type | TEGORAD2010 | TEGORAD2010 | TEGORAD2010 | TEGORAD2600 |
| Number of acrylate groups | 5 | 5 | 5 | 8 |
| Amount of silicone compound added | 2.0 parts by mass | 3.0 parts by mass | 4.0 parts by mass | 2.0 parts by mass |
| Curability | Excellent | Excellent | Excellent | Excellent |
| Blocking resistance (PC) | Good | Excellent | Excellent | Good |
| Blocking resistance (coated paper) | Fair | Good | Good | Fair |
| Adhesion (PC) | Excellent | Excellent | Excellent | Excellent |

(continued)

| | Ink Set 13 (Example) | Ink Set 14 (Example) | Ink Set 15 (Example) | Ink Set 16 (Example) |
|---|---|---|---|---|
| Vacuum forming suitability (PC) | Good | Good | Fair | Fair |
| Vacuum forming suitability (mold 1, PC) | No cracking of film, no whitening | No cracking of film, whitening occurred in single color area | neo cracking of film, whitening occurred in single color area | No cracking of film, no whitening |
| Vacuum forming suitability (mold 2, PC) | No cracking of film, whitening occurred in single color area | No cracking of film, whitening occurred in single color area | No cracking of film, whitening occurred in single color area | No cracking of film, whitening occurred in single color area |
| Vacuum forming suitability (mold 3, PC) | No cracking of film, whitening occurred in single color area | No cracking of film, whitening occurred in single color area | Cracking of film occurred, whitening occurred in single color area | Cracking of film occurred, whitening occurred in single color area |
| Trimming suitability (PC) | Good | Good | Fair | Fair |
| Continuous printing test | Fair | Fair | Fair | Fair |

<Preparation of Ink Sets 17 to 50 (polymer composition)>

Components described in Table 17 other than the polymerization initiator and the pigment dispersion were stirred by a SILVERSON mixer (10 minutes, 3,000 to 5,000 rpm) to give a uniform transparent liquid. The polymerization initiator and the pigment dispersion were added to this transparent liquid and stirred (10 to 20 minutes, 2,000 to 3,000 rpm) to give Ink Mother Liquor Set 2.

(Table 17)

| Ink Mother Liquor Set 2 | Cyan | Magenta | Yellow | Black | White |
|---|---|---|---|---|---|
| PEA | 21.80 | 16.60 | 22.50 | 23.60 | 0.10 |
| IBOA | 12.00 | 12.00 | 12.00 | 12.00 | 12.00 |
| NVC | 24.00 | 24.00 | 24.00 | 24.00 | 24.00 |
| OH-TEMP | 0.30 | 0.30 | 0.30 | 0.30 | 0.30 |
| ITX | 1.00 | 1.00 | 1.00 | 1.00 | - |
| TPO | 2.80 | 2.80 | 2.80 | 2.80 | 3.80 |
| Irg819 | 2.80 | 2.80 | 2.80 | 2.80 | 2.80 |
| C dispersion | 8.30 | - | - | - | - |
| M dispersion | - | 13.50 | - | - | - |
| Y dispersion | - | - | 7.60 | - | - |
| K dispersion | - | - | - | 6.50 | - |
| W dispersion | - | - | - | - | 30.00 |
| TEGORAD2010 | 2.00 | 2.00 | 2.00 | 2.00 | 2.00 |

40 parts of the polymer produced above (Polymers 1 to 26) and 60 parts of PEA (60 minutes, 3,000 to 5,000 rpm) were mixed, and dilution liquids of Polymers 1 to 26 (polymer concentration 40 mass%) as uniform transparent liquids were obtained.

<Preparation of Ink Sets 17 to 40>

10 parts of the polymer dilution liquid and 15 parts of PEA were added to Ink Mother Liquor Set 2 produced above, in accordance with Table 18 to Table 23. Stirring was carried out using a SILVERSON mixer (10 minutes, 3,000 to 5,000 rpm), thus giving Ink Sets 17 to 40. The concentration of polymer in each color ink composition of Ink Sets 17 to 40 was 4 mass%.

Evaluation was carried out by the same procedure as for Ink Set 1, and the results are shown in Table 18 to Table 23 below.

(Table 18)

| | Ink Set 17 (Example) | Ink Set 18 (Example) | Ink Set 19 (Example) | Ink Set 20 (Example) | |
|---|---|---|---|---|---|
| Polymer type | Polymer 1 | Polymer 2 | Polymer 3 | Polymer 4 | |
| Polymer Tg (°C) | 75 | 65 | 70 | 35 | |
| Polymer weight-average molecular weight | 30,000 | 30,000 | 30,000 | 30,000 | |
| Curability | Excellent | Excellent | Excellent | Excellent | |
| Blocking resistance (PC) | Good | Good | Good | Fair | |
| Blocking resistance (coated paper) | Fair | Fair | Fair | Fair | |
| Adhesion (PC) | Excellent | Excellent | Excellent | Good | |
| Vacuumforming suitability (PC) | Good | Good | Good | Good | |
| Vacuumforming suitability (mold 1, PC) | No cracking of film, no whitening | No cracking of film, no whitening | No cracking of film, no whitening | No cracking of film, no whitening | |
| Vacuumforming suitability (mold 2, PC) | No cracking of film, whitening occurred in single color area | No cracking of film, whitening occurred in single color area | No cracking of film, whitening occurred in single color area | No cracking of film, whitening occurred in single color area | |
| Vacuumforming suitability (mold 3, PC) | No cracking of film, whitening occurred in single color area | No cracking of film, whitening occurred in single color area | No cracking of film, whitening occurred in single color area | No cracking of film, whitening occurred in single color area | |
| Trimming suitability (PC) | Good | Good | Good | Excellent | |
| Continuous printing test | Fair | Fair | Fair | Fair | |

(Table 19)

| | Ink Set 21 (Comparative Example) | Ink Set 22 (Comparative Example) | Ink Set 23 (Comparative Example) | Ink Set 24 (Comparative Example) |
|---|---|---|---|---|
| Polymer type | Polymer 5 | Polymer 6 | Polymer 7 | Polymer 8 |
| Polymer Tg (°C) | 15 | 5 | -10 | -20 |
| Polymer weight-average molecular weight | 30,000 | 30,000 | 30,000 | 30,000 |
| Curability | Excellent | Excellent | Excellent | Excellent |
| Blocking resistance (PC) | Fair | Good | Poor | Poor |
| Blocking resistance (coated paper) | Fair | Poor | Poor | Poor |
| Adhesion (PC) | Poor | Poor | Poor | Poor |
| Vacuum forming suitability (PC) | Not tested due to poor adhesion | Not tested due to poor adhesion | Not tested due to poor adhesion | Not tested due to poor adhesion |
| Vacuum forming suitability (mold 1, PC) | | | | |
| Vacuum forming suitability (mold 2, PC) | | | | |
| Vacuum forming suitability (mold 3, PC) | | | | |
| Trimming suitability (PC) | | | | |
| Continuous printing test | Fair | Fair | Fair | Fair |

(Table 20)

| | Ink Set 25 (Comparative Example) | Ink Set 26 (Comparative Example) | Ink Set 27 (Example) | Ink Set 28 (Example) |
|---|---|---|---|---|
| Polymer type | Polymer 9 | Polymer 10 | Polymer 11 | Polymer 12 |
| Polymer Tg (°C) | 130 | 110 | 90 | 70 |
| Polymer weight-average molecular weight | 30,000 | 30,000 | 30,000 | 30,000 |

(continued)

| | Ink Set 25 (Comparative Example) | Ink Set 26 (Comparative Example) | Ink Set 27 (Example) | Ink Set 28 (Example) |
|---|---|---|---|---|
| Curability | Not tested due to poor discharge | Excellent | Excellent | Excellent |
| Blocking resistance (PC) | | Excellent | Excellent | Good |
| Blocking resistance (coated paper) | | Good | Fair | Fair |
| Adhesion (PC) | | Excellent | Excellent | Excellent |
| Vacuum forming suitability (PC) | | Good | Good | Good |
| Vacuum forming suitability (mold 1, PC) | | No cracking of film, no whitening | No cracking of film, no whitening | No cracking of film, no whitening |
| Vacuum forming suitability (mold 2, PC) | | No cracking of film, whitening occurred in single color area | No cracking of film, whitening occurred in single color area | No cracking of film, whitening occurred in single color area |
| Vacuum forming suitability (mold 3, PC) | | No cracking of film, whitening occurred in single color area | No cracking of film, whitening occurred in single color area | No cracking of film, whitening occurred in single color area |
| Trimming suitability (PC) | Good | Poor | Good | Good |
| Continuous printing test | Poor | Fair | Fair | Fair |

(Table 21)

| | Ink Set 29 (Example) | Ink Set 30 (Example) | Ink Set 31 (Example) | Ink Set 32 (Comparative Example) |
|---|---|---|---|---|
| Polymer type | Polymer 13 | Polymer 14 | Polymer 15 | Polymer 16 |
| Polymer Tg (°C) | 50 | 40 | 35 | 180 |
| Polymer weight-average molecular weight | 30,000 | 30,000 | 30,000 | 30,000 |

(continued)

| | Ink Set 29 (Example) | Ink Set 30 (Example) | Ink Set 31 (Example) | Ink Set 32 (Comparative Example) |
|---|---|---|---|---|
| Curability | Excellent | Excellent | Excellent | Not tested due to poor discharge |
| Blocking resistance (PC) | Fair | Fair | Fair | |
| Blocking resistance (coated paper) | Fair | Fair | Fair | |
| Adhesion (PC) | Excellent | Excellent | Good | |
| Vacuum forming suitability (PC) | Good | Good | Good | |
| Vacuum forming suitability (mold 1, PC) | No cracking of film, no whitening | No cracking of film, no whitening | No cracking of film, no whitening | |
| Vacuum forming suitability (mold 2, PC) | No cracking of film, whitening occurred in single color area | No cracking of film, whitening occurred in single color area | No cracking of film, whitening occurred in single color area | |
| Vacuum forming suitability (mold 3, PC) | No cracking of film, whitening occurred in single color area | No cracking of film, whitening occurred in single color area | No cracking of film, whitening occurred in single color area | |
| Trimming suitability (PC) | Excellent | Excellent | Excellent | |
| Continuous printing test | Fair | Fair | Fair | Poor |

(Table 22)

| | Ink Set 33 (Comparative Example) | Ink Set 34 (Example) | Ink Set 35 (Example) | Ink Set 36 (Comparative Example) |
|---|---|---|---|---|
| Polymer type | Polymer 17 | Polymer 18 | Polymer 19 | Polymer 20 |
| Polymer Tg (°C) | 107 | 65 | 20 | -10 |
| Polymer weight-average molecular weight | 30,000 | 30,000 | 30,000 | 30,000 |
| Curability | Excellent | Excellent | Excellent | Excellent |
| Blocking resistance (PC) | Excellent | Good | Fair | Fair |
| Blocking resistance (coated paper) | Good | Fair | Fair | Poor |
| Adhesion (PC) | Excellent | Excellent | Good | Poor |

(continued)

| | Ink Set 33 (Comparative Example) | Ink Set 34 (Example) | Ink Set 35 (Example) | Ink Set 36 (Comparative Example) |
|---|---|---|---|---|
| Vacuum forming suitability (PC) | Good | Good | Good | Not tested due to poor blocking and adhesion |
| Vacuum forming suitability (mold 1, PC) | No cracking of film, no whitening | No cracking of film, no whitening | No cracking of film, no whitening | |
| Vacuum forming suitability (mold 2, PC) | No cracking of film, whitening occurred in single color area | No cracking of film, whitening occurred in single color area | No cracking of film, whitening occurred in single color area | |
| Vacuum forming suitability (mold 3, PC) | cracking of film, whitening occurred in single color area | No cracking of film, whitening occurred in single color area | No cracking of film, whitening occurred in single color area | |
| Trimming suitability (PC) | Poor | Good | Excellent | |
| Continuous printing test | Fair | Fair | Fair | Fair |

(Table 23)

| | Ink Set 37 (Comparative Example) | Ink Set 38 (Comparative Example) | Ink Set 39 (Example) | Ink Set 40 (Comparative Example) |
|---|---|---|---|---|
| Polymer type | Polymer 21 | Polymer 22 | Polymer 23 | Polymer 24 |
| Polymer Tg (°C) | -40 | -65 | 20 | 105 |
| Polymer weight-average molecular weight | 30,000 | 30,000 | 30,000 | 30,000 |
| Curability | Excellent | Excellent | Excellent | Excellent |
| Blocking resistance (PC) | Poor | Poor | Fair | Excellent |
| Blocking resistance (coated paper) | Poor | Poor | Fair | Good |
| Adhesion (PC) | Poor | Poor | Good | Excellent |

(continued)

| | Ink Set 37 (Comparative Example) | Ink Set 38 (Comparative Example) | Ink Set 39 (Example) | Ink Set 40 (Comparative Example) |
|---|---|---|---|---|
| Vacuum forming suitability (PC) | Not tested due to poor blocking and adhesion | Not tested due to poor blocking and adhesion | Good | Good |
| Vacuum forming suitability (mold 1, PC) | | | No cracking of film, no whitening | No cracking of film, no whitening |
| Vacuum forming suitability (mold 2, PC) | | | No cracking of film, whitening occurred in single color area | No cracking of film, whitening occurred in single color area |
| Vacuum forming suitability (mold 3, PC) | | | No cracking of film, whitening occurred in single color area | No cracking of film, whitening occurred in single color area |
| Trimming suitability (PC) | | | Excellent | Poor |
| Continuous printing test | Fair | Fair | Fair | Fair |

<Preparation of Ink Sets 41 to 50>

A polymer dilution liquid and PEA (for adjustment of pigment concentration) were added to Ink Mother Liquor Set 2 produced above, in accordance with Table 24 to 26 below. Stirring was carried out using a SILVERSON mixer (10 minutes, 3,000 to 5,000 rpm), thus giving Ink Sets 41 to 50. For example, when producing Ink Set 43, after adding 5.0 parts of the polymer dilution liquid so that the polymer concentration in each color ink composition became 2 mass%, 20 parts of PEA was added so that the pigment concentrations of all the ink sets was equal to that of Ink Set 1.

Evaluation was carried out by the same procedure as for Ink Set 1, and the results are shown in Table 24 to Table 26 below.

(Table 24)

| | Ink Set 41 (Comparative Example) | Ink Set 42 (Comparative Example) | Ink Set 43 (Example) | Ink Set 44 (Example) |
|---|---|---|---|---|
| Polymers type | None | Polymer 25 | Polymer 25 | Polymer 25 |
| Polymer Tg (°C) | - | 70 | 70 | 70 |
| Polymer weight-average molecular weight | - | 5,000 | 5,000 | 5,000 |
| Polymer concentration | - | 0.5 mass% | 2 mass% | 4 mass% |
| Curability | Excellent | Excellent | Excellent | Excellent |
| Blocking resistance (PC) | Fair | Fair | Good | Excellent |
| Blocking resistance (coated paper) | Poor | Fair | Fair | Good |
| Adhesion (PC) | Poor | Poor | Excellent | Excellent |

(continued)

| | Ink Set 41 (Comparative Example) | Ink Set 42 (Comparative Example) | Ink Set 43 (Example) | Ink Set 44 (Example) |
|---|---|---|---|---|
| Vacuum forming suitability (PC) | Not tested due to poor adhesion | Not tested due to poor adhesion | Excellent | Excellent |
| Vacuum forming suitability (mold 1, PC) | | | No cracking of film, no whitening | No cracking of film, no whitening |
| Vacuum forming suitability (mold 2, PC) | | | No cracking of film, no whitening in single color area | No cracking of film, no whitening in single color area |
| Vacuum forming suitability (mold 3, PC) | | | No cracking of film, no whitening in single color area | No cracking of film, no whitening in single color area |
| Trimming suitability (PC) | | | Good | Good |
| Continuous printing test | Excellent | Excellent | Excellent | Excellent |

(Table 25)

| | Ink Set 45 (Example) | Ink Set 46 (Example) | Ink Set 47 (Example) |
|---|---|---|---|
| Polymer type | Polymer 25 | Polymer 25 | Polymer 25 |
| Polymer Tg (°C) | 70 | 70 | 70 |
| Polymer weight-average molecular weight | 5,000 | 5,000 | 5,000 |
| Polymer concentration | 6 mass% | 8 mass% | 10 mass% |
| Curability | Excellent | Excellent | Not tested due to poor discharge |
| Blocking resistance (PC) | Excellent | Excellent | |
| Blocking resistance (coated paper) | Good | Good | |
| Adhesion (PC) | Excellent | Excellent | |
| Vacuum forming suitability (PC) | Good | Good | |
| Vacuum forming suitability (mold 1, PC) | No cracking of film, no whitening | No cracking of film, no whitening | |
| Vacuum forming suitability (mold 2, PC) | No cracking of film, whitening occurred in single color area | No cracking of film, whitening occurred in single color area | |
| Vacuum forming suitability (mold 3, PC) | No cracking of film, whitening occurred in single color area | No cracking of film, whitening occurred in single color area | |
| Trimming suitability (PC) | Good | Good | |
| Continuous printing test | Excellent | Excellent | Poor |

(Table 26)

| | Ink Set 48 = Ink Set 44 (Example) | Ink Set 49 (Example) | Ink Set 50 (Example) |
|---|---|---|---|
| Polymer type | Polymer 25 | Polymer 26 | Polymer 1 |
| Polymer Tg (°C) | 70 | 70 | 70 |
| Polymer weight-average molecular weight | 5,000 | 10,000 | 30,000 |
| Polymer concentration | 4 mass% | 4 mass% | 4 mass% |
| Curability | Excellent | Excellent | Excellent |
| Blocking resistance (PC) | Excellent | Excellent | Excellent |
| Blocking resistance (coated paper) | Good | Good | Good |
| Adhesion (PC) | Excellent | Excellent | Excellent |
| Vacuum forming suitability (PC) | Excellent | Excellent | Fair |
| Vacuum forming suitability (mold 1, PC) | No cracking of film, no whitening | No cracking of film, no whitening | No cracking of film, whitening occurred |
| Vacuum forming suitability (mold 2, PC) | No cracking of film, no whitening in single color area | No cracking of film, no whitening in single color area | No cracking of film, whitening occurred in single color area |
| Vacuum forming suitability (mold 3, PC) | No cracking of film, no whitening in single color area | No cracking of film, no whitening in single color area | No cracking of film, whitening occurred in single color area |
| Trimming suitability (PC) | Good | Good | Good |
| Continuous printing test | Excellent | Excellent | Fair |

<Type of substrate (support)>

A commercial inkjet printer (Acuity 350, Fujifilm Corporation) was charged with the ink composition produced above (Ink sets 1 to 4), and a printed sample (100%) was produced using this. Printing was carried out by changing the type of substrate to polycarbonate (PC, thickness: 0.75mm, Lexan Polycarbonate, Robert Horne), polyethylene terephthalate (PET, thickness: 1.00 mm, Falcon Petg, Robert Horne), or polystyrene (PS, thickness: 1.00 mm, Falcon Hi Impact Polystyrene, Robert Horne).

Here, 100% means conditions for the maximum amount of ink to be obtained when printing was carried out under standard printing conditions for the printer.

After a printed material that was produced was allowed to stand at room temperature (25°C) for 24 hours, a molded printed material was produced using a vacuum forming machine (Model 725FLB Vacuum Former) manufactured by C. R. Clarke.

A heater was set so that the substrate temperature reached 180°C within 30 seconds, and the heating time was 60 seconds. Three types of molds (mold 1: rectangular parallelepiped with area 10 cm × 10 cm and height 2 cm, mold 2: rectangular parallelepiped with area 10 cm × 10 cm and height 5 cm, mold 3: rectangular parallelepiped with area 10 cm × 10 cm and height 10 cm) were used.

Subsequently, the molded printed material produced by above vacuum forming was subjected to trimming. A portion spaced by 0.5 cm from the rise of the rectangular parallelepiped was sectioned using a straw cutter, and the cross section was evaluated using the following criteria. The results are shown in Table 27 below.

Excellent: no peeling of film in the cross section of mold 1, 2, or 3

Good: no peeling of film in the cross section of mold 1 or 2 but peeling occurred in the cross section of mold 3

Fair: no peeling of film in the cross section of mold 1 but peeling occurred in the cross section of mold 2 and 3

Poor: peeling occurred in the cross section of mold 1

(Table 27)

| Support | PC | PET | PS |
|---|---|---|---|
| Ink Set 1 (Example) | Good | Excellent | Excellent |
| Ink Set 2 (Example) | Fair | Good | Excellent |
| Ink Set 3 (Example) | Good | Excellent | Excellent |
| Ink Set 4 (Example) | Good | Excellent | Excellent |

## Claims

1. An inkjet ink composition comprising:

   (Component A) *N*-vinylcaprolactam,
   (Component B) a monofunctional acrylate having an aromatic ring,
   (Component C) a monofunctional acrylate having an aliphatic hydrocarbon ring,
   (Component D) a polyether-modified silicone compound having a (meth)acrylate group,
   (Component E) an acrylic resin having a glass transition temperature (Tg) of 20°C to 100°C and which is a copolymer of two or more types of methacrylic compounds selected from the group consisting of methyl methacrylate, n-butyl methacrylate, phenoxyethyl methacrylate, tetrahydrofurfuryl methacrylate, 2-ethylhexyl methacrylate, isodecyl methacrylate, methoxypolyethylene glycol methacrylate, n-lauryl methacrylate, cyclohexyl methacrylate, 2-ethylhexyl methacrylate and t-butyl methacrylate,
   (Component F) a pigment, and
   (Component G) a photopolymerization initiator,
   wherein the total content of Component A to Component C is at least 90 mass% of the total mass of polymerizable compounds, excluding Component D, in the ink composition, and
   the content of Component E is 1 to 8 mass% relative to the total mass of the ink composition.

2. The inkjet ink composition according to Claim 1, wherein Component B is 2-phenoxyethyl acrylate.

3. The inkjet ink composition according to Claim 1 or Claim 2, wherein Component C is at least one of 3,3,5-trimethylcyclohexyl acrylate, *t*-butylcyclohexyl acrylate and isobornyl acrylate.

4. The inkjet ink composition according to Claim 3, wherein Component C is *t*-butylcyclohexyl acrylate.

5. The inkjet ink composition according to any preceding claim, wherein Component D is a polyether-modified silicone compound having four to six (meth)acrylate groups.

6. The inkjet ink composition according to any preceding claim, comprising 0.5 to 3 mass%, relative to the total mass of the ink composition, of the Component D.

7. The inkjet ink composition according to any preceding claim, wherein the contents by mass of Component A to Component C satisfy (content of Component C)/(content of Component A + content of Component B) < 0.5.

8. The inkjet ink composition according to any preceding claim, wherein Component E has a weight-average molecular weight of 5,000 to 10,000.

9. The inkjet ink composition according to any preceding claim, wherein the inkjet ink composition is an inkjet ink composition for vacuum forming.

10. The inkjet ink composition according to any preceding claim, wherein the inkjet ink composition is an inkjet ink

composition for vacuum forming and trimming.

**11.** An inkjet recording method comprising:

($a^1$) discharging the inkjet ink composition as defined in any preceding claim onto a support, and
($b^1$) curing the ink composition by irradiating the discharged ink composition with actinic radiation.

**12.** A printed material obtained by the inkjet recording method according to Claim 11.

**13.** A process for producing a molded printed material comprising:

($a^2$) forming an image by discharging the inkjet ink composition as defined in any of Claims 1 to 10 onto a support by an inkjet method,
($b^2$) curing the ink composition by irradiating the obtained image with actinic radiation to obtain a printed material having a cured image above the support, and
($c^2$) molding the printed material.

**14.** A process for producing a molded printed material comprising:

(1) forming an image by discharging the inkjet ink composition as defined in any of Claims 1 to 10 by an inkjet method onto a substrate having a thickness of 0.5 to 3 mm and formed from polycarbonate, polystyrene, an acrylic resin, polyethylene terephthalate or an acrylonitrile-butadiene-styrene copolymer,
(2) curing the ink composition by irradiating the obtained image with actinic radiation to obtain a printed material having a cured image above the support,
(3) heating the printed material in a range of 70°C to 200°C,
(4) inserting the heated printed material into a mold and molding it into a three-dimensional structure by means of at least vacuum forming to thus obtain a molded printed material, and
(5) subjecting the molded printed material to trimming.

**Patentansprüche**

**1.** Tintenstrahl-Tintenzusammensetzung, umfassend:

(Komponente A) N-Vinylcaprolactam,
(Komponente B) ein monofunktionales Acrylat, das einen aromatischen Ring aufweist,
(Komponente C) ein monofunktionales Acrylat, das einen aliphatischen Kohlenwasserstoffring aufweist,
(Komponente D) eine Polyether-modifizierte Silikonverbindung, die eine (Meth)acrylatgruppe aufweist,
(Komponente E) ein Acrylharz, das eine Glasübergangstemperatur (Tg) von 20°C bis 100°C aufweist und welches ein Copolymer von zwei oder mehr Arten von methacrylischen Verbindungen ist, ausgewählt aus der Gruppe, bestehend aus Methylmethacrylat, n-Butylmethacrylat, Phenoxyethylmethacrylat, Tetrahydrofurfurylmethacrylat, 2-Ethylhexylmethacrylat, Isodecylmethacrylat, Methoxypolyethylenglycolmethacrylat, n-Laurylmethacrylat, Cyclohexylmethacrylat, 2-Ethylhexylmethacrylat und t-Butylmethacrylat,
(Komponente F) ein Pigment und
(Komponente G) einen Fotopolymerisationsinitiator,
worin der Gesamtgehalt von Komponente A bis Komponente C mindestens 90 Masse-% der Gesamtmasse der polymerisierbaren Verbindungen, ausgenommen die Komponente D, in der Tintenzusammensetzung ausmacht und
der Gehalt der Komponente E 1 bis 8 Masse-% beträgt, relativ zur Gesamtmasse der Tintenzusammensetzung.

**2.** Tintenstrahl-Tintenzusammensetzung gemäß Anspruch 1, worin Komponente B 2-Phenoxyethylacrylat ist.

**3.** Tintenstrahl-Tintenzusammensetzung gemäß Anspruch 1 oder 2, worin die Komponente C mindestens eine von 3,3,5-Trimethylcyclohexylacrylat, t-Butylcyclohexylacrylat und Isobornylacrylat ist.

**4.** Tintenstrahl-Tintenzusammensetzung gemäß Anspruch 3, worin die Komponente C t-Butylcyclohexylacrylat ist.

**5.** Tintenstrahl-Tintenzusammensetzung gemäß irgendeinem vorstehenden Anspruch, worin die Komponente D eine

Polyether-modifizierte Silikonverbindung ist, die vier bis sechs (Meth)acrylatgruppen aufweist.

**6.** Tintenstrahl-Tintenzusammensetzung gemäß irgendeinem vorstehenden Anspruch, umfassend 0,5 bis 3 Masse-%, relativ zur Gesamtmasse der Tintenzusammensetzung, der Komponente D.

**7.** Tintenstrahl-Tintenzusammensetzung gemäß irgendeinem vorstehenden Anspruch, worin die Masseanteile von Komponente A bis Komponente C (Anteil der Komponente C)/(Anteil der Komponente A + Anteil der Komponente B) < 0,5 erfüllt.

**8.** Tintenstrahl-Tintenzusammensetzung gemäß irgendeinem vorstehenden Anspruch, worin die Komponente E ein gewichtsgemitteltes Molekulargewicht von 5.000 bis 10.000 aufweist.

**9.** Tintenstrahl-Tintenzusammensetzung gemäß irgendeinem vorstehenden Anspruch, worin die Tintenstrahl-Tintenzusammensetzung eine Tintenstrahl-Tintenzusammensetzung zum Vakuumformen ist.

**10.** Tintenstrahl-Tintenzusammensetzung gemäß irgendeinem vorstehenden Anspruch, worin die Tintenstrahl-Tintenzusammensetzung eine Tintenstrahl-Tintenzusammensetzung zum Vakuumformen und Trimmen ist.

**11.** Tintenstrahl-Aufzeichnungsverfahren, umfassend:

($a^1$) Ausstoßen der Tintenstrahl-Tintenzusammensetzung, wie sie in irgendeinem vorstehenden Anspruch definiert ist, auf einen Träger und
($b^1$) Härten der Tintenzusammensetzung durch Bestrahlen der ausgestoßenen Tintenzusammensetzung mit aktinischer Strahlung.

**12.** Bedrucktes Material, erhalten durch das Tintenstrahl-Aufzeichnungsverfahren gemäß Anspruch 11.

**13.** Verfahren zur Herstellung eines geformten, bedruckten Materials, umfassend:

($a^2$) Formen eines Bildes durch Ausstoßen der Tintenstrahl-Tintenzusammensetzung, wie sie in irgendeinem der Ansprüche 1 bis 10 definiert ist, auf einen Träger mittels eines Tintenstrahlverfahrens,
($b^2$) Härten der Tintenzusammensetzung durch Bestrahlen des erhaltenen Bildes mit aktinischer Strahlung, um ein bedrucktes Material zu erhalten, das ein gehärtetes Bild oberhalb des Trägers aufweist, und
($c^2$) Formen des bedruckten Materials.

**14.** Verfahren zur Herstellung eines geformten, bedruckten Materials, umfassend:

(1) Formen eines Bildes durch Ausstoßen der Tintenstrahl-Tintenzusammensetzung, wie sie in irgendeinem der Ansprüche 1 bis 10 definiert ist, durch ein Tintenstrahlverfahren auf ein Substrat, das eine Dicke von 0,5 bis 3 mm aufweist und aus Polycarbonat, Polystyrol, einem Acrylharz, Polyethylenterephthalat oder einem Acrylnitil-Butadien-Styrol-Copolymer gebildet ist,
(2) Härten der Tintenzusammensetzung durch Bestrahlen des erhaltenen Bildes mit aktinischer Strahlung, um ein bedrucktes Material zu erhalten, das ein gehärtetes Bild oberhalb des Trägers aufweist,
(3) Erwärmen des bedruckten Materials im Bereich von 70°C bis 200°C,
(4) Einführen des erwärmten, bedruckten Materials in eine Form und Formen hiervon, um eine dreidimensionale Struktur durch zumindest Vakuumformen zu bilden, um somit ein geformtes, bedrucktes Material zu erhalten und
(5) Unterziehen des geformten, bedruckten Materials unter ein Trimmen.

## Revendications

**1.** Composition d’encre pour jet d’encre comprenant :

(Composant A) *N*-vinylcaprolactame,
(Composant B) un acrylate monofonctionnel présentant un cycle aromatique,
(Composant C) un acrylate monofonctionnel présentant un cycle hydrocarboné aliphatique,
(Composant D) un composé de silicone modifié par un polyéther présentant un groupe (méth)acrylate,
(Composant E) une résine acrylique présentant une température de transition vitreuse (Tg) de 20 °C à 100 °C

et qui est un copolymère de deux ou plus de deux types de composés méthacryliques sélectionnés dans le groupe constitué du méthacrylate de méthyle, du méthacrylate de n-butyle, du méthacrylate de phénoxyéthyle, du méthacrylate de tétrahydrofurfuryle, du méthacrylate de 2-éthylhexyle, du méthacrylate d'isodécyle, du méthacrylate de méthoxypolyéthylène glycol, du méthacrylate de n-lauryle, du méthacrylate de cyclohexyle, du méthacrylate de 2-éthylhexyle et du méthacrylate de t-butyle,
(Composant F) un pigment, et
(Composant G) un initiateur de photopolymérisation,
dans laquelle la teneur totale en composant A à composant C est au moins de 90 % en masse de la masse totale des composés polymérisables, en excluant le composant D, dans la composition d'encre, et
la teneur en composant E est de 1 à 8 % en masse par rapport à la masse totale de la composition d'encre.

**2.** Composition d'encre pour jet d'encre selon la revendication 1, dans laquelle le composant B est l'acrylate de 2-phénoxyéthyle.

**3.** Composition d'encre pour jet d'encre selon la revendication 1 ou la revendication 2, dans laquelle le composant C est au moins un parmi l'acrylate de 3,3,5-triméthylcyclo-hexyle, l'acrylate de *t*-butylcyclohexyle et l'acrylate d'isobornyle.

**4.** Composition d'encre pour jet d'encre selon la revendication 3, dans laquelle le composant C est l'acrylate de *t*-butylcyclohexyle.

**5.** Composition d'encre pour jet d'encre selon une quelconque revendication précédente, dans laquelle le composant D est un composé de silicone modifié par un polyéther présentant quatre à six groupes (méth)acrylate.

**6.** Composition d'encre pour jet d'encre selon une quelconque revendication précédente, comprenant 0,5 à 3 % en masse, par rapport à la masse totale de la composition d'encre, du composant D.

**7.** Composition d'encre pour jet d'encre selon une quelconque revendication précédente, dans laquelle les teneurs en masse en composant A à composant C satisfont (teneur en composant C)/(teneur en composant A + teneur en composant B) < 0,5.

**8.** Composition d'encre pour jet d'encre selon une quelconque revendication précédente, dans laquelle le composant E présente un poids moléculaire moyen en poids de 5000 à 10 000.

**9.** Composition d'encre pour jet d'encre selon une quelconque revendication précédente, dans laquelle la composition d'encre pour jet d'encre est une composition d'encre pour jet d'encre pour formage sous vide.

**10.** Composition d'encre pour jet d'encre selon une quelconque revendication précédente, dans laquelle la composition d'encre pour jet d'encre est une composition d'encre pour jet d'encre pour formage sous vide et rognage.

**11.** Procédé d'enregistrement par jet d'encre comprenant :

($a^1$) le déchargement de la composition d'encre pour jet d'encre telle que définie dans une quelconque revendication précédente sur un support, et
($b^1$) le durcissement de la composition d'encre par l'irradiation de la composition d'encre déchargée avec un rayonnement actinique.

**12.** Matériau imprimé obtenu par le procédé d'enregistrement par jet d'encre selon la revendication 11.

**13.** Procédé de production d'un matériau imprimé et moulé comprenant :

($a^2$) la formation d'une image par le déchargement de la composition d'encre pour jet d'encre telle que définie dans l'une quelconque des revendications 1 à 10 sur un support par un procédé de jet d'encre,
($b^2$) le durcissement de la composition d'encre par l'irradiation de l'image obtenue avec un rayonnement actinique pour obtenir un matériau imprimé présentant une image durcie au-dessus du support, et
($c^2$) le moulage du matériau imprimé.

**14.** Procédé de production d'un matériau imprimé et moulé comprenant :

(1) la formation d'une image par le déchargement de la composition d'encre pour jet d'encre telle que définie dans l'une quelconque des revendications 1 à 10 par un procédé de jet d'encre sur un substrat présentant une épaisseur de 0,5 à 3 mm et formé à partir de polycarbonate, de polystyrène, d'une résine acrylique, de polytéréphtalate d'éthylène ou d'un copolymère d'acrylonitrile-butadiène-styrène,
(2) le durcissement de la composition d'encre par l'irradiation de l'image obtenue avec un rayonnement actinique pour obtenir un matériau imprimé présentant une image durcie au-dessus du support,
(3) le chauffage du matériau imprimé dans une plage de 70 °C à 200 °C,
(4) l'insertion du matériau imprimé chauffé dans un moule et son moulage en une structure tridimensionnelle au moyen au moins d'un formage sous vide pour ainsi obtenir un matériau imprimé et moulé, et
(5) la soumission du matériau imprimé et moulé à un rognage.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002273830 A
- JP 2009185186 A
- JP 2010235697 A
- JP 2009209353 A
- JP 2011225824 A
- JP 47006416 B
- JP 47003981 B
- JP 47022326 B
- JP 47023664 B
- JP 57030704 A
- JP 60026483 B
- JP 60026403 B
- JP 62081345 A
- JP 1034242 B
- US 4318791 A
- EP 0284561 A
- JP 2211452 A
- JP 61194062 A
- JP 2009597 B
- JP 2009596 B
- JP 63061950 B
- JP 59042864 B
- JP 60008047 B
- JP 63040799 B
- EP 104143 A
- US 4837124 A
- JP 2150848 A
- JP 2096514 A
- EP 370693 A
- EP 233567 A
- EP 297443 A
- EP 297442 A
- EP 279210 A
- EP 422570 A
- US 3902144 A
- US 4933377 A
- US 4760013 A
- US 4734444 A
- US 2833827 A
- US 4743528 A
- JP 63138345 A
- JP 63142345 A
- JP 63142346 A
- JP 46042363 B
- JP 52147277 B
- JP 52014278 B
- JP 52014279 B
- JP 4537377 B
- JP 4486516 B
- US 3567453 A
- US 4343891 A
- EP 109772 A
- EP 109773 A
- JP 63143537 A
- JP 59152396 A
- JP 61151197 A
- JP 63041484 A
- JP 2000249 A
- JP 2004705 A
- JP 1304453 A
- JP 1152109 A
- EP 0290750 A
- EP 046083 A
- EP 156153 A
- EP 271851 A
- EP 0388343 A
- US 3901710 A
- US 4181531 A
- JP 60198538 A
- JP 53133022 A
- EP 0199672 A
- EP 84515 A
- EP 199672 A
- EP 044115 A
- EP 0101122 A
- US 4618564 A
- US 4371605 A
- US 4431774 A
- JP 6418143 A
- JP 2245756 A
- JP 4365048 A
- JP 62006223 B
- JP 63014340 B
- JP 59174831 A
- GB 1388492 A
- JP 53133428 A
- DE 3337024
- JP 62058241 A
- JP 5281728 A
- DE 2641100
- DE 3333450
- DE 3021590
- DE 3021599
- JP 2011032348 A
- JP 4420189 B
- JP 51082102 A
- JP 52134692 A
- JP 59138205 A

- JP 60084305 A
- JP 62018537 A
- JP 6433104 A
- JP 53000702 A
- JP 55500806 B
- JP 5142772 A
- JP 56075643 A
- JP 48042965 B
- JP 55034414 B
- JP 6308727 A
- JP 6250387 A
- JP 8054735 A
- JP 62173463 A
- JP 62183457 A
- JP 58185677 A
- JP 61190537 A
- JP 2000782 A
- JP 5197075 A
- JP 9034057 A
- JP 46002784 A
- JP 5194483 A
- US 3214463 A
- JP 48030492 B
- JP 56021141 B
- JP 10088106 A
- JP 4298503 A
- JP 8053427 A
- JP 8239368 A
- JP 10182621 A
- JP 8501291 W
- EP 223739 A
- EP 309401 A
- EP 309402 A
- EP 310551 A
- EP 310552 A
- EP 459416 A
- DE 3435443
- JP 54048535 A
- JP 62262047 A
- JP 63113536 A
- JP 63163351 A
- JP 2262654 A
- JP 2071262 A
- JP 3121449 A
- JP 5061166 A
- JP 5119449 A
- US 4814262 A
- US 4980275 A
- JP 62021572 A
- JP 2001049200 A
- US 6084250 A
- JP 60132767 A
- WO 9954415 A
- JP 10199360 A


**Non-patent literature cited in the description**


- **J. BRANDRUP ; E. H. IMMERGUT.** Polymer Handbook. Wiley-Interscience, 1989
- **J. P. FOUASSIER ; J. F. RABEK.** RADIATION CURING IN POLYMER SCIENCE AND TECHNOLOGY. 1993, 77-117
- **WAKABAYASHI.** *Bull. Chem. Soc. Japan,* 1969, vol. 42, 2924
- **F. C. SCHAEFER et al.** *J. Org. Chem.,* 1964, vol. 29, 1527
- **M. R. SANDER et al.** *Journal of Polymer Society,* 1972, vol. 10, 3173